# EUROPEAN PATENT SPECIFICATION

(11) **EP 0 916 520 B1**
(45) Date of publication and mention of the grant of the patent: **17.03.2004**
(21) Application number: 98308966.5
(22) Date of filing: 03.11.1998
(51) Int. Cl.: B60B 21/06

(54) **Bicycle wheel**
Fahrradrad
Roue de bicyclette

(30) Priority: 13.11.1997 US 969607; 20.02.1998 US 27293; 01.07.1998 US 108300
(43) Date of publication of application: 19.05.1999
(60) Divisional application: 03000030.1
(73) Proprietor: SHIMANO INC., Osaka (JP)
(72) Inventor: Okajima, Shinpei, Izumi-shi, Osaka (JP); Muraoka, Tsutomu, Sakai-shi, Osaka (JP)
(74) Representative: Murnane, Graham John

(56) References cited:
- EP-A- 0 786 360
- FR-A- 1 332 603
- FR-A- 2 526 374
- US-A- 1 450 064
- US-A- 4 529 253
- US-A- 5 452 945
- PATENT ABSTRACTS OF JAPAN vol. 009, no. 128 (M-384), 4 June 1985 (1985-06-04) & JP 60 012315 A (YAMAHA HATSUDOKI KK), 22 January 1985 (1985-01-22)

## Description

### BACKGROUND OF THE INVENTION

### 1. Field of the Invention

This invention generally relates to a bicycle wheel with a hub adapted to be mounted to a bicycle frame, an annular rim and a plurality of spokes extending inwardly from the rim to the hub. More specifically, the present invention relates to the connection between the spokes and the rim of the bicycle wheel.

### 2. Background Information

Bicycling is becoming an increasingly more popular form of recreation as well as a means of transportation. Moreover, bicycling has also become a very popular competitive sport for both amateurs and professionals. Whether the bicycle is used for recreation, transportation or competition, the bicycle industry is constantly improving the various components of the bicycle. One particular component of bicycles which has been extensively redesigned over the past years is the bicycle wheel. Bicycle wheels are constantly being redesigned to be lightweight and more aerodynamic in design as well as to be simple to manufacture and assemble.

There are many different types of bicycle wheels which are currently available on the market. The most basic bicycle wheels have a hub portion which is attached to a part of the frame of the bicycle for relative rotation, a plurality of spokes extending outwardly from the hub and an annular rim coupled to the outer ends of the spokes for supporting a pneumatic tire thereon. Typically, the spokes of the bicycle wheel were thin metal wire spokes. The ends of the hub are provided with a flange that is used to coupled the spokes thereto. In particular, holes are provided in the hub flanges. The wire spokes are usually bent on their inner end and provided with a flange that is formed in the shape of a nail head. The inner end is supported in one of the holes in one of the hub flanges. The outer end of the spokes typically are provided with threads for engaging spoke nipples which secure the outer ends of the wire spokes to the rim. In particular, the spoke nipples have flanges which engage the interior surface of the rim.

With a spoke constructed in this manner, the nipple is installed in a nipple hole formed in the rim, the spoke is inserted through the hole of the hub flange with the flange of the inner end of the spoke engaging the hole of the hub flange. The male threads on the outer ends of the spokes are threaded into the female threads of the spoke nipples installed in the openings of the rim.

FR-A-2 526 374 and FR-A-1 332 603 show examples of spoke and rim arrangements where the outer ends of the spokes are bent and provided with flanges.

A bicycle spoke according to the preamble of claim 1 is known from FR-A-2 526 374.

### SUMMARY OF THE INVENTION

The first aspect of the present invention is directed to a bicycle spoke in accordance with claim 1. The second aspect of the present invention is directed to a spoked rim assembly in accordance with claim 6. The third aspect of the present invention is directed to a bicycle wheel in accordance with claim 28.

### BRIEF DESCRIPTION OF THE DRAWINGS

Referring now to the attached drawings which form a part of this original disclosure:
Figure 1 is a side elevational view of a front bicycle wheel with a front hub, twelve spokes and a rim in accordance with a first embodiment of the present invention;
Figure 2 is a side elevational view of a rear bicycle wheel with a rear hub, sixteen spokes and a rim in accordance with the first embodiment of the present invention;
Figure 3 is an enlarged elevational view of the front bicycle hub illustrated in Figure 1 with the inner end portions of the spokes coupled thereto;
Figure 4 is a partial, enlarged side elevational view of a portion of the front bicycle wheel illustrating the connection between the rim and two of the spokes of the bicycle wheel illustrated in Figure 1;
Figure 5 is a partial, cross-sectional view of the rim as seen along section line 5-5 of Figure 4 with two of the spokes of the bicycle wheel illustrated in Figures 1 and 4 shown in elevation;
Figure 6 is an enlarged perspective view of one of the spokes utilized in the bicycle wheels illustrated in Figures 1-5 in accordance with the first embodiment of the present invention;
Figure 7 is a partial, cross-sectional view of a bicycle rim and two bicycle spokes in accordance with a second embodiment of the present invention;
Figure 8 is a partial, side elevational view of the bicycle rim and two bicycle spokes illustrated in Figure 7 in accordance with the second embodiment of the present invention;
Figure 8a is an enlarged perspective view of one of the spokes utilized in the bicycle wheels illustrated in Figures 7 and 8 in accordance with the second embodiment of the present invention;
Figure 9 is a partial, cross-sectional view of a bicycle rim and two bicycle spokes in accordance with a third embodiment of the present invention;
Figures 10 to 14 shows embodiments wich are not part of the present invention;
Figure 15 is a partial, cross-sectional view of the bicycle rim and two bicycle spokes in accordance with the fourth embodiment of the present invention;
Figure 16 is a partial, cross-sectional view of a bicycle rim and two bicycle spokes in accordance with an fifth embodiment of the present invention;
Figure 17 is a partial, cross-sectional view of a bicycle rim and two bicycle spokes in accordance with a sixth embodiment of the present invention;
Figure 18 is a partial, cross-sectional view of a bicycle rim and two bicycle spokes in accordance with a seventh embodiment of the present invention;
Figure 19 is a partial, side elevational view of a bicycle rim and two bicycle spokes in accordance with an eighth embodiment of the present invention;
Figure 20 is a partial, side elevational view of a bicycle rim and two bicycle spokes in accordance with a ninth embodiment of the present invention;
Figure 21 is a partial, side elevational view of a bicycle rim and two bicycle spokes in accordance with a tenth embodiment of the present invention;
Figures 22 to 27 shows embodiments which are not part of the present invention;
Figure 28 is a partial, cross-sectional view of a bicycle rim and two bicycle spokes in accordance with a eleventh embodiment of the present invention;
Figure 29 is a partial, side elevational view of the bicycle rim and two bicycle spokes illustrated in Figure 28 in accordance with the eleventh embodiment of the present invention;
Figure 30 is a partial, cross-sectional view of a bicycle rim and two bicycle spokes illustrated in Figures 28 and 29, prior to the rivets being deformed to fixedly secure the spokes to the rim;
Figure 31 is a partial, cross-sectional view of a bicycle rim and two bicycle spokes illustrated in Figures 28-30, with an anvil inserted into the hollow area of the rim;
Figure 32 is a partial, cross-sectional view of a bicycle rim and two bicycle spokes illustrated in Figures 28-31, with the rivets being deformed to fixedly secure the spokes to the rim;
Figure 33 is a partial, cross-sectional view of a bicycle rim and two bicycle spokes illustrated in Figures 28-32 in accordance with a eleventh embodiment of the present invention;
Figure 34 is a partial, top plan view of a bicycle rim and two bicycle spokes illustrated in Figures 28-33 in accordance with a eleventh embodiment of the present invention;
Figure 35 is a partial, cross-sectional view of a bicycle rim and two bicycle spokes in accordance with a twelfth embodiment of the present invention; and
Figure 36 is a partial, side elevational view of the bicycle rim and two bicycle spokes illustrated in Figure 35 in accordance with the twelfth embodiment of the present invention.
Figure 37 is an enlarged, partial side elevational view of a portion of the front bicycle wheel illustrating the connection between the rim and two of the spokes of the bicycle wheel illustrated in Figure 1;
Figure 38 is an enlarged, partial perspective view of a portion of the front the bicycle rim in accordance with the thirteenth embodiment of the present invention;
Figure 39 is a partial, cross-sectional view of the bicycle rim as seen along section line 6-6 of Figure 37 with two of the spokes of the bicycle wheel illustrated in elevation;
Figure 40 is an enlarged, partial side elevational view of the spoke illustrated in Figures 37-39 in accordance with the thirteenth embodiment of the present invention;
Figure 41 is an enlarged, partial edge elevational view of the spoke illustrated in Figure 40 in accordance with the thirteenth embodiment of the present invention;
Figure 42 is an enlarged perspective view of one of the spokes utilized in the bicycle wheels illustrated in Figures 40 and 41 in accordance with the thirteenth embodiment of the present invention;
Figure 43 is an enlarged, partial cross-sectional view of the bicycle rim and one of the bicycle spokes as seen along section line 10-10 of Figure 37 in accordance with the thirteenth embodiment of the present invention;
Figure 44 is an enlarged, partial cross-sectional view, similar to Figure 43, of a modified bicycle rim and one of the bicycle spokes as in accordance with an fourteenth embodiment of the present invention;
Figure 45 is a partial, cross-sectional view, similar to Figures 43 and 44, of a modified of the bicycle rim and one of the bicycle spokes in accordance with a fifteenth embodiment of the present invention;
Figure 46 is a partial, side elevational view of a modified bicycle spoke in accordance with a sixteenth embodiment of the present invention;
Figure 47 is a partial, edge elevational view of the modified bicycle spoke in accordance with the sixteenth embodiment of the present invention;
Figure 48 is an end elevational view of the modified bicycle spoke in accordance with the sixteenth embodiment of the present invention;
Figure 49 is a partial, side elevational view of a modified bicycle spoke in accordance with a seventeenth embodiment of the present invention;
Figure 50 is a partial, edge elevational view of the modified bicycle spoke in accordance with the seventeenth embodiment of the present invention; and
Figure 51 is an end elevational view of the modified bicycle spoke in accordance with the seventeenth, embodiment of the present invention.

### DETAILED DESCRIPTION OF THE PREFERRED EMBODIMENTS

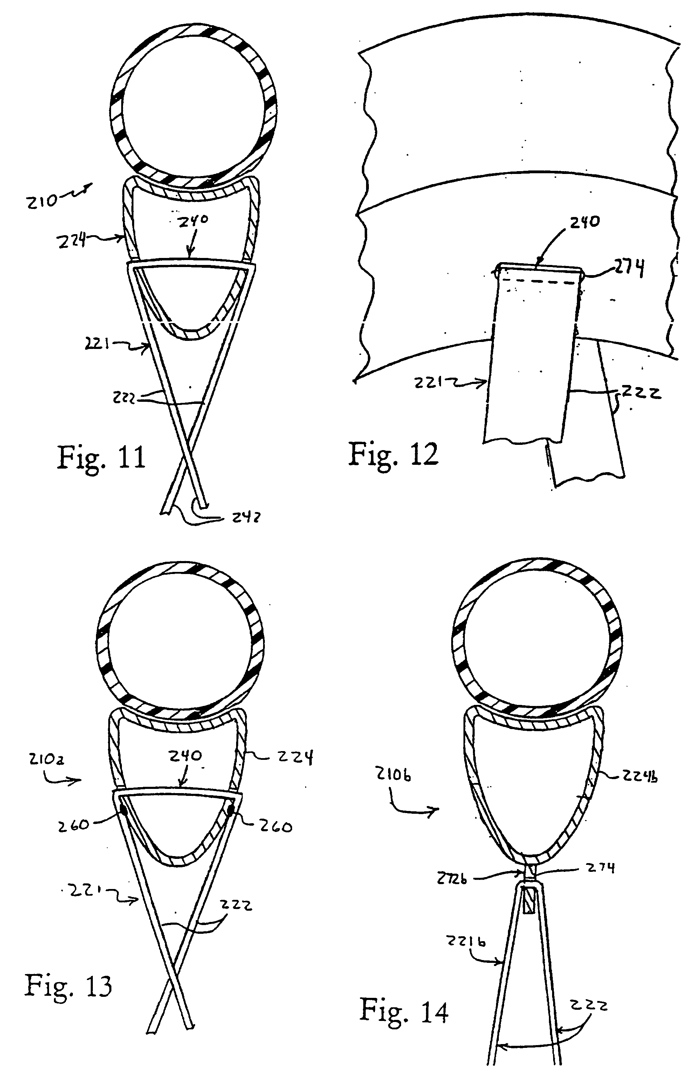

It should be noted that the embodiments illustrated in Figures 11 to 14 and 22 to 27 are only included to assist in the understanding of the invention. These embodiments do not form part of the claimed invention.

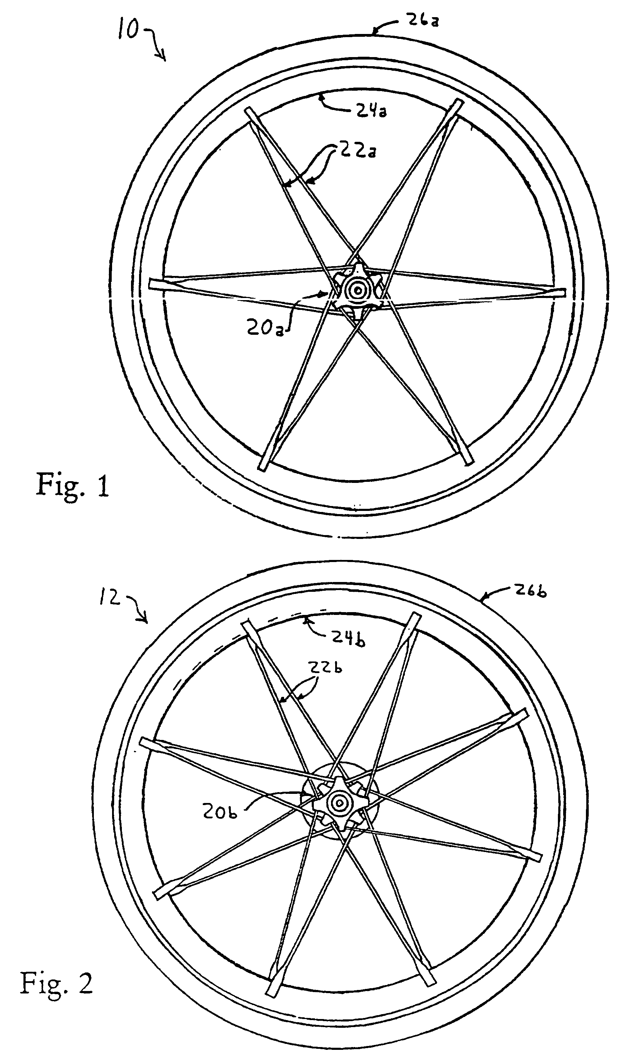

Referring initially to Figures 1 and 2, a front bicycle wheel 10 in accordance with the present invention is illustrated in Figure 1, and a rear bicycle wheel 12 in accordance with the present invention is illustrated in Figure 2. Front wheel 10 has a central hub 20a, a plurality of outwardly extending spokes 22a and an annular rim 24a with a pneumatic tire 26a coupled thereto in a conventional manner. Similarly, rear bicycle wheel 12 has a rear hub 20b, a plurality of outwardly extending spokes 22b and an annular rim 24b with a pneumatic tire 26b coupled thereto in a conventional manner. Basically, the overall constructions of front bicycle wheel 10 and rear bicycle wheel 12 are substantially identical, except that rim and hub have been modified to accommodate a different number of spokes.

In the first embodiment shown herein, front bicycle wheel 10 has twelve spokes 22a, while rear bicycle wheel 12 has sixteen spokes 22b. Of course, it will be apparent to those skilled in the art from this disclosure that the front and rear wheels 10 and 12 can have the same number of spokes as well as fewer or more spokes than illustrated. In view of the similarities between front bicycle wheel 10 and rear bicycle wheel 12, only front bicycle wheel 10 will be discussed and illustrated in detail herein. Accordingly, it will be apparent to those skilled in the art from this disclosure that the description pertaining to the construction of front wheel 10 also applies to rear bicycle wheel 12.

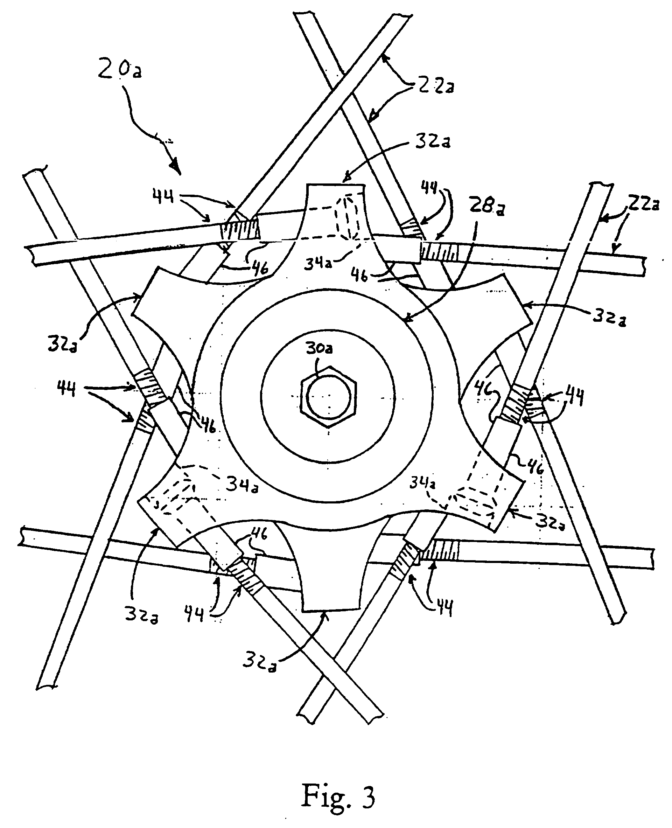

Referring now to Figure 3, front hub 20a has a cylindrical hub shell 28a that is rotatably supported on a hub axle 30a in a substantially conventional manner. The hub shell 28a has a pair of flanges located at its opposite ends, with three outwardly extending spoke attachment parts 32a on each flange. Spoke attachment parts 32a are designed to receive two spokes 22a therein as explained below. In particular, each spoke attachment part 32a preferably has a pair of stepped bores or through holes 34a for coupling a pair of spokes 22a to each of the spoke attachment parts 32a. Of course, each of the spoke attachment parts 32a could have fewer/more spokes 22a coupled thereto as needed and/or desired. The number and shape of the spoke attachment parts will depend upon the number of spokes and their shapes. Accordingly, it will be apparent to those skilled in the art from this disclosure that other types and shapes of hubs can be utilized in connection with the present invention.

The particular constructions of hubs 20a and 20b and their connection to spokes 22a are disclosed and discussed in more detail in copending European Patent Application No. 97300461.7 filed on January 24, 1997 in the name of Shimano Inc.

Spokes 22a and 22b are preferably identical, and thus, only spokes 22a will be shown and discussed in detail herein. Spokes 22a are preferably constructed of a conventional metallic material utilized in construction of spokes, such as plated steel, stainless steel, aluminum or carbon fibre composite. Of course, it will be apparent to those skilled in the art from this disclosure that other suitable materials can be utilized as needed and/or desired.

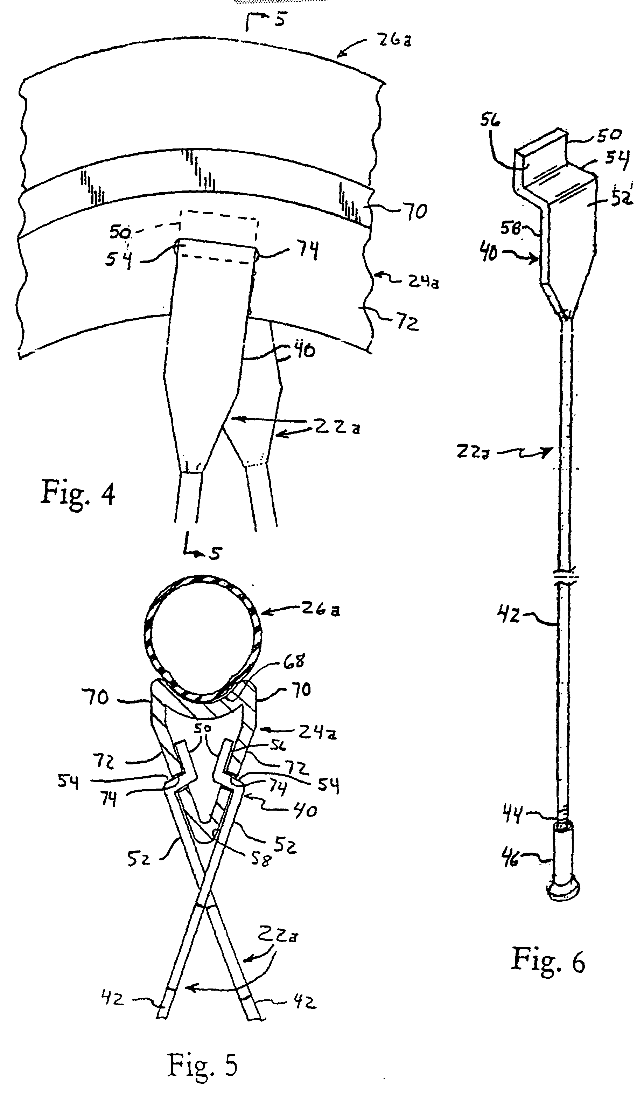

As seen in Figure 6, each of the spokes 22a has an outer end portion or spoke head 40 which is coupled to rim 24a, a straight centre portion 42 located radially inwardly of outer end portion 40 and an inner end portion 44 located radially inwardly of the centre portion 42 which is coupled to hub 20a. Preferably, outer end portion 40, centre portion 42 and inner end portion 44 are constructed as a unitary, one-piece member with spoke nipples 46 theadedly coupled to the inner end portion 44 of each of the spokes 22a for connection to hub 20a. Spokes 22a extend from the left and right ends of the hub 20a towards the rim 24a. In other words, in a twelve spoke embodiment, six spokes extend substantially outwardly from the right end of hub 20a to rim 24a and six spokes extend substantially outwardly from the left end of hub 20a to rim 24a. Spokes 22a are preferably tangentially arranged relative to hub 20a as they extend outwardly therefrom. Of course, spokes 22a can be arranged in a more radial direction if needed and/or desired.

In the first embodiment, outer end portions 40 of spokes 22a have an elongated cross-section such as a rectangular cross-section, while centre portions 42 and inner end portions 44 each have a circular cross-section. Of course, it will be apparent to those skilled in the art that the entire length of spokes 22a can be substantially uniform along its entire cross-section if needed and/or desired. It will also be apparent to those skilled in the art that constant cross-section spokes could utilize a variety of cross-sectional shapes as needed and/or desired. For example, spokes with an elliptical cross-section could be used in accordance with the present invention.

As seen in Figures 5 and 6, outer end portions 40 of spokes 22a are bent to form first sections 50 at the free ends of spokes 22a which are offset from the second sections 52. This offsetting of the first and second section 50 and 52 forms a bend section 54 therebetween which retains the spoke 22a to rim 24a as discussed below. Preferably, second sections 52 of each spoke 22a lies substantially in the same plane as its respective centre portion. First section 50, on the other hand, lies in a plane which is spaced from the plane of the second section 52 and preferably parallel thereto. Of course, it will be apparent to those skilled in the art from this disclosure that first section 50 can be bent or formed to have a different shape and/or cross-section than the illustrated shapes and cross-sections. In any event, the shapes and cross-sections of first section 50, second section 52 and bend section 54 of each spoke should be configured to prevent axial movement of the spoke relative to rim 24a when the spoke is in the installed position.

As seen in Figures 4-6, first section 50 of each spoke 22a has a first contact surface 56 facing in a first direction to engage an inner surface of rim 24a, while second section 52 of each spoke 22a has a second contact surface 58 facing in a second direction to engage the outer surface of rim 24a. The lateral spacing between first contact surface 56 of first section 50 and second contact surface 58 is preferably slightly larger than the thickness of rim 24a. Accordingly, when spokes 22a are installed in rim 24a, spokes 22a engage rim 24a to prevent any substantial movement therebetween.

Optionally, additional fastening means such as an adhesive or cement or the like can be utilized to more firmly and fixedly secure outer end portions 40 of spokes 22a to the spoke attachment portions of the annular rim 24a. The term "adhesive" as used herein, including the claims, includes any compound or material which can be used to secure to materials together including cements and the like. Moreover, fasteners or fastening means (not shown), such as spot welding, rivets or threaded fasteners or the like, can be utilized if needed and/or desired. Such fasteners can extend through either first contact surface 56 or second contact surface 58, and into the side portions of rim 24a. In addition, fasteners can be used in conjunction with adhesive or the like.

Centre portions 42 of spokes 22a are illustrated as being substantially straight wire type spokes with a substantially circular cross-section. However, it will be apparent to those skilled in the art from this disclosure that centre portions 42 of spokes 22a can be configured to have other types of cross-sections and/or shapes. For example, centre portions 42 can be more rectangular in cross-section with the shape being uniformed along the entire length of centre portion 42. Alternatively, the cross-section of centre portion 42 can vary along its length such that the cross-section of centre portion 42 becomes wider as it approaches hub 24a. In other words, the thickness and/or width of centre portion 42 can be either uniformed or varied as needed and/or desired.

Inner end portions 44 of spokes 22a are threaded for receiving conventional spoke nipples 46 thereon. More specifically, inner end portions 44 of spokes 22a are received within one end of bores 34a of hub 20a, and then spoke nipples 46a are inserted through the other end of bores 34a such that the headed or flanged portion of the spoke nipples 46 engage an internal abutment surface of bores 34. Accordingly, spokes 22a can be tightened in a substantially conventional manner between hub 20a and rim 24a to secure inner end portions 44 of spokes 22a thereto.

Rim 24a is a so-called deep rim in which the rim height is greater than the rim width and is designed to have pneumatic tire 26a fastened thereto by a tire cement. Of course, rim 24a can have other shapes to accommodate other types of tires as needed and/or desired without departing from the scope of the present invention. Annular rim 24a is constructed of a substantially rigid material which is known to be used in the art. For example, rims 24a can be constructed of any suitable metallic material, such as plated steel, stainless steel, aluminum or titanium, as well as other non-metallic materials, such as a carbon fibre composite, which can be utilized for a bicycle wheel.

Rim 24a is substantially circular as seen in side elevation (Figure 1), and has an outer annular surface 68 adapted to receive pneumatic tire 26a thereon, a pair of annular braking portions 70 located on the sides of rim 24a and a pair of annular spoke attachment portions 72 located on the sides of rim 24a as seen in Figure 5. Rim 24a is a tubular member with a hollow, annular inner area. It will be apparent to those skilled in the art that the shape of outer annular surface 68 of rim 24a could be modified to accommodate different types of tires such as "clinchers" as needed and/or desired. In the preferred embodiment, outer annular surface 68 of rim 24a is designed for use with "tubular" or "sew-up" type tires which are cemented to outer annular surface 68.

Braking portions 70 are preferably substantially flat, circular surfaces which are designed to be engaged with the brake pads of a brake device for slowing or stopping rotation of wheel 10. Braking portions 70 are preferably parallel to each other and located between outer annular surface 68 and one of the spoke attachment portions.

Spoke attachment portions 72 are located radially inwardly relative to outer annular surface 68 and braking portions 70 of the rim 24a. Preferably, spoke attachment portions 72 are angled towards each other to form a substantially V-shaped section of rim 24a with its apex pointed towards the centre of wheel 10. Each spoke attachment portion 72 has a plurality of openings 74 for receiving first sections 50 of the spokes 22a therein. Openings 74 are preferably equally spaced about spoke attachment portions 72. In this first embodiment, the plurality of openings 74 are preferably elongated openings or slots which are sized and shaped to receive the outer end portions of the spokes therein. Elongated openings 74 distribute the forces on rim 24a over a greater area than ordinary round spokes such that stress fracturing and/or tearing of rim 24a is minimized.

Preferably, openings 74 are spaced from the innermost edge of rim 24a by at least 5.0 millimetres to increase the resistance of damage to rim 24a. Preferably, the radial distance from the inner edge of openings 74 to the innermost edge of rim 24a is at least one third the circumferential length of opening 74. The farther openings 74 can be spaced from the inner peripheral edge of rim 24a, the stronger the connection between spokes 22a and rim 24a. The radial widths of openings 74a are preferably substantially equal to or slightly greater than the widths of spokes 22a so that debris, dirt and the like does not enter the hollow area of rim 24a. In the preferred embodiments, the thickness of spokes 22a at first end sections 50 is in the range of approximately 0.5 millimetres to approximately 3.0 millimetres. Accordingly, openings 74 can have a radial width in the range of approximately 0.5 millimetres to approximately 5.0 millimetres. In one example, the thickness of first end section 50 of each spoke 22a is approximately 1.0 millimetres and the radial width of each opening 74 is approximately 1.2 millimetres.

In the preferred embodiments of the present invention, first end sections 50 and bend sections 54 are configured such that they can pass freely through openings 74 of rim 24a such that it is unnecessary to have either centre portion 42 or inner end portion 44 of each spoke to pass through openings 74. Moreover, openings 74 are preferably configured to be substantially the same shape as the cross-section of bend sections 54 of spokes 22a and only slightly larger as mentioned above. Thus, openings 74 limit movement of bend sections 54 therein when spokes 22a are in the installed position. In particular, the shapes and cross-sections of first section 50, second section 52 and bend section 54 of each spoke should be configured to prevent axial movement of the spoke relative to rim 24a when the spoke is in the installed position.

### Second Embodiment

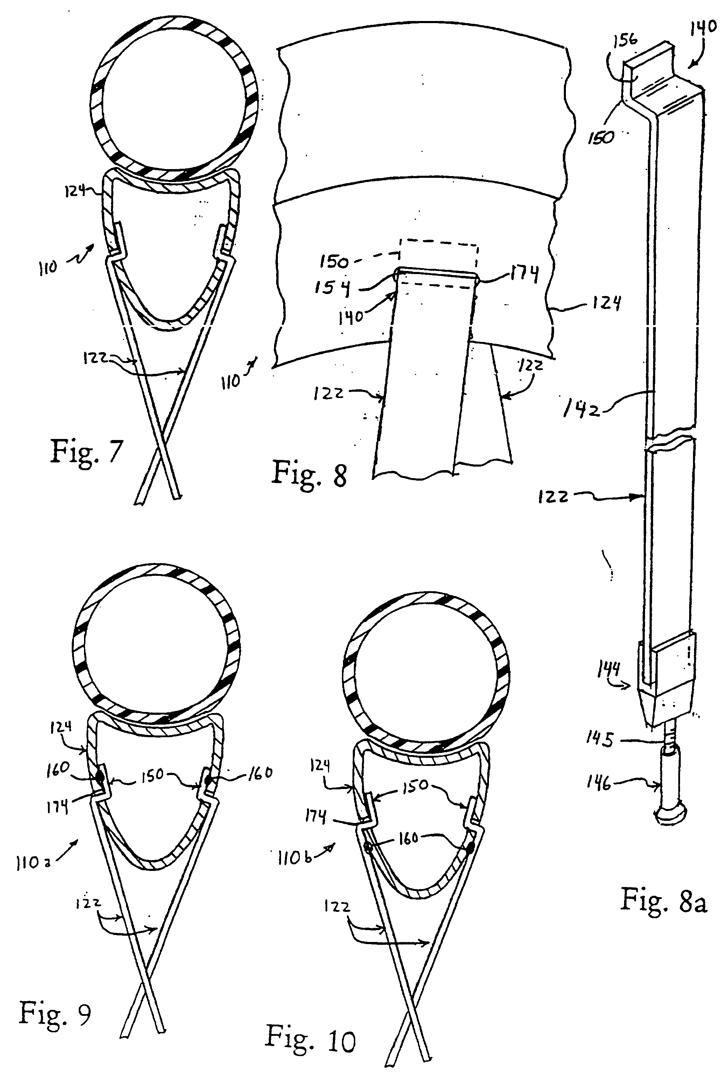

As seen in Figures 7 and 8, a bicycle wheel 110 with a modified rim and spoke connection is illustrated in partial cross-sectional view and side elevational view. In this embodiment, the shape of rim 124 has been changed as well as the shape of spokes 122. In particular, the shape of rim 124 has been changed such that space exists between exterior side surfaces of rim 124 and outer end portion 140.

Similar to the first embodiment, each of the spokes 122 has an outer end portion or spoke head 140 which extends into the hollow portion of rim 124 via openings 174, a substantially straight centre portion 142 extending inwardly from outer end portion 140 and an inner end portion 144 located radially inwardly of centre portion 142 such that inner end portion 144 is coupled to the hub. Preferably, outer end portion 140, centre portion 142 and inner end portion 144 are constructed as a one-piece, unitary member with a connection member or spoke nipple 146 coupled to inner end portion 144 for connection to hub 20.

Spokes 122 are held in openings 174 of rim 124 via contact pressure between first contact surface 156 of first end section 150 engaging the inner surface of rim 124. Moreover, in this embodiment the inner end portions 144 of spokes 122 have a threaded member 145 fixedly coupled thereto for coupling spokes 122 to hub 20 via spoke nipple 146 as seen in Figure 8a.

In view of the similarities between the first embodiment and the second embodiment of the present invention, this second embodiment will not be discussed or illustrated in detail herein. Rather, the description of the first embodiment discussed above should basically apply to this second embodiment.

### Third Embodiment

As seen in Figure 9, a partial cross-sectional view of a bicycle wheel 1 10a is illustrated in accordance with a third embodiment of the present invention. The embodiment of Figure 9 is basically identical to the embodiment illustrated in Figures 7 and 8, except that the spokes 122 are permanently secured to rim 124. In particular, the first end sections 150 of spokes 122 are fixedly secured to the inner surface of rim 124 via fastening means 160 such as spot welds, adhesive, cement or the like. Of course, fastening means 160 can also be a fastener such as a rivet or a bolt and nut or the like. Moreover, a fastener can be used in conjunction with an adhesive, cement or the like.

In view of the similarities of this embodiment with prior embodiments of the present invention, this embodiment will not be discussed or illustrated in detail herein. Rather, the description of the previous embodiments explaining the present invention applies to this embodiment.

Figures 10 to 14 shows embodiments which are not part of the present invention.

As seen in Figure 10, a partial cross-sectional view of a bicycle wheel 110b is illustrated. This embodiment is substantially similar to the embodiments of Figures 7-9, except for the positioning of the fastening means 160. In this embodiment, spokes 122 are permanently secured to the exterior surface of rim 124 via fastening means 160 such as spot welds, adhesive, cement or the like. Of course, fastening means 160 can also be a fastener such as a rivet or a bolt and nut or the like. Moreover, a fastener can be used in conjunction with an adhesive, cement or the like. In view of the similarities between this embodiment and the previous embodiments, this embodiment will not be discussed or illustrated in detail herein.

As seen in Figures 1I and 12, a partial cross-sectional view and a partial elevational view of a bicycle wheel 210 are illustrated. In this embodiment, a one-piece spoke 221 is utilized to create two spokes 222. In other words, each of the spokes 222 has an outer end portion or spoke head 240 which extends through the hollow portion of rim 224 via openings 274, a pair of straight centre portions 242 located radially inwardly of outer end portion 240 and a pair of inner end portions (not shown) located radially inwardly of centre portions 242 such that inner end portions are coupled to the hub. Preferably, outer end portion 240, centre portions 242 and inner end portions are constructed as a one-piece, unitary member with connection members or spoke nipples coupled to inner end portions for connection to hub 20. Preferably, inner end portions are similar in construction to inner end portions 144 as seen in Figure 8a.

As seen in Figure 13, a partial cross-sectional view of a bicycle wheel 210a is illustrated. This embodiment is similar to the embodiment illustrated in Figures 11 and 12, except that each of the spokes 222 are fixedly coupled to rim 224 via fastening means 260 such as spot welds, adhesive, cement or the like. Of course, fastening means 260 can also be a fastener such as a rivet or a bolt and nut or the like. Moreover, a fastener can be used in conjunction with an adhesive, cement or the like. In particular, the centre portions 242 are each fixedly coupled to opposite sides of the exterior surface of the attachment portions of the rim.

Referring to Figure 14, a partial cross-sectional view of a bicycle wheel 210b is illustrated. In this embodiment, a plurality of spoke attachment portions or members 272b (only one shown) with opening 274 are coupled to rim 224b at equally spaced apart locations. In this embodiment, a one-piece spoke 221b is utilized to form a pair of spokes 222. Of course, a single, annular flange may be used to form the spoke attachment portion of rim 224b.

### Fourth Embodiment

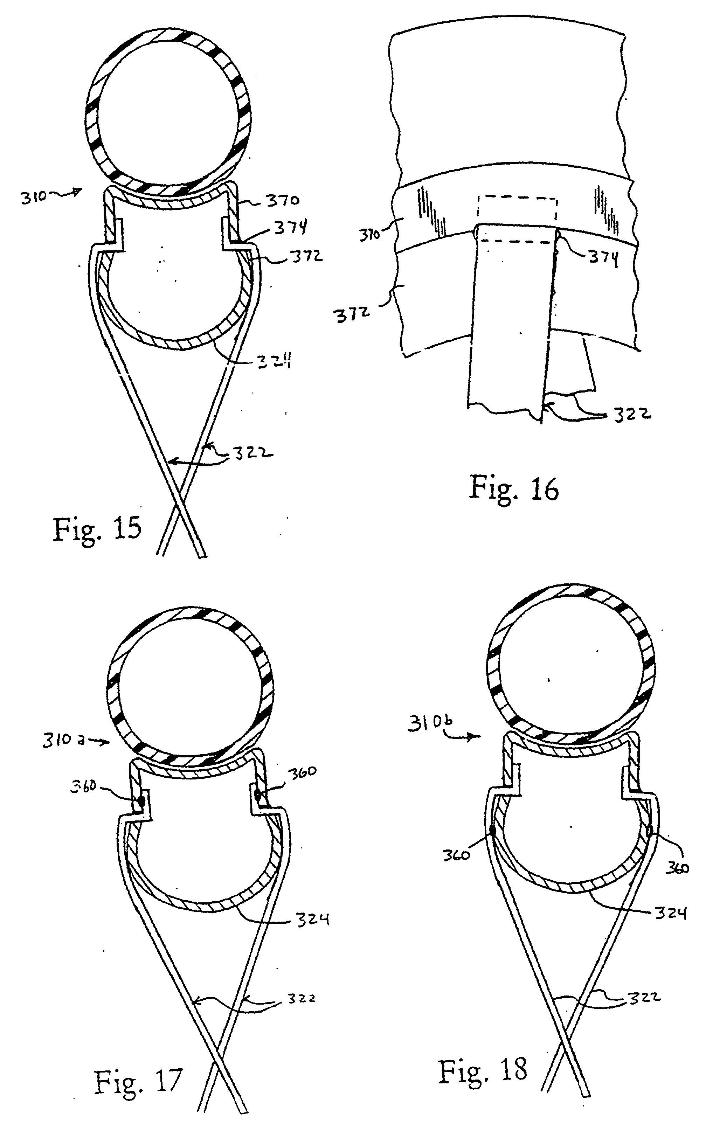

Referring now to Figures 15 and 16, a partial cross-sectional view and a partial elevational view of a bicycle wheel 310 in accordance with an fourth embodiment of the present invention is illustrated. Similar to the first embodiment, each of the spokes 322 has an outer end portion or spoke head 340 which extends into the hollow portion of rim 324 via openings 374, a substantially straight centre portion 342 extending inwardly from outer end portion 340 and an inner end portion (not shown) located radially inwardly of centre portion 142 such that inner end portion is coupled to the hub.
Preferably, outer end portion 140, centre portions 142 and inner end portion are constructed as a one-piece, unitary member with a connection member or spoke nipple coupled to inner end portion for connection to hub 20.

Spokes 122 are held in openings 174 of rim 124 via contact pressure between first contact surface 156 of first end section 150 engaging the inner surface of rim 124. Moreover, in this embodiment the inner end portions 144 of spokes 122 have a threaded member 145 fixedly coupled thereto for coupling spokes 122 to hub 20 via spoke nipple 146 as seen in Figure 8a.

In this embodiment, the attachment portions 372 are bowed outwardly to form a bulged section such that the outermost point of the attachment portions 372 are spaced farther apart than the braking portions 370. In other words, the bulged section of the attachment portions 372 has an axial width which is greater than the axial width between the braking portions 370. Accordingly, spokes 322 are bent along this curved section for attachment to the hub.

In view of the similarities of this embodiment to the prior embodiments described herein, this embodiment will not be discussed or illustrated in detail herein. Rather, the description of the prior embodiments of the present invention should apply to this embodiment.

### Fifth Embodiment

As seen in Figure 17, a cross-sectional elevational view of a bicycle wheel 310a in accordance with a fifth embodiment of the present invention is illustrated. This embodiment is substantially identical to the eighth embodiment, except that the spokes 322 are permanently coupled to rim 324. In this embodiment, the spokes 322 are fixedly coupled to rim 324 via fastening means 360 such as spot welds, adhesive, cement or the like. Of course, fastening means 360 can also be a fastener such as a rivet or a bolt and nut or the like. Moreover, a fastener can be used in conjunction with an adhesive, cement or the like. In other words, spokes 322 are fixedly or permanently secured to rim 324. The fastening means 360 is located along the upper part of the centre portions of spokes 222 in this embodiment.

In view of the similarities between this embodiment and the prior embodiments of the present invention, this embodiment will not be discussed or illustrated in detail herein. Rather, the description of the features of the present invention as described in the prior embodiments should also apply to this embodiment.

### Sixth Embodiment

As seen in Figure 18, a partial cross-sectional view of a bicycle wheel 310b is illustrated for use with spokes 322. In this embodiment, the spokes 222 are permanently coupled to the inner surface of rim 324 via fastening means 360 such as spot welds, adhesive, cement or the like. Of course, fastening means 360 can also be a fastener such as a rivet or a bolt and nut or the like. Moreover, a fastener can be used in conjunction with an adhesive, cement or the like.

In view of the similarities between this embodiment and prior embodiments of the present invention, this embodiment will not be discussed or illustrated in detail herein. Rather, the description of the prior embodiments should also apply to this embodiment.

### Eighth Embodiment

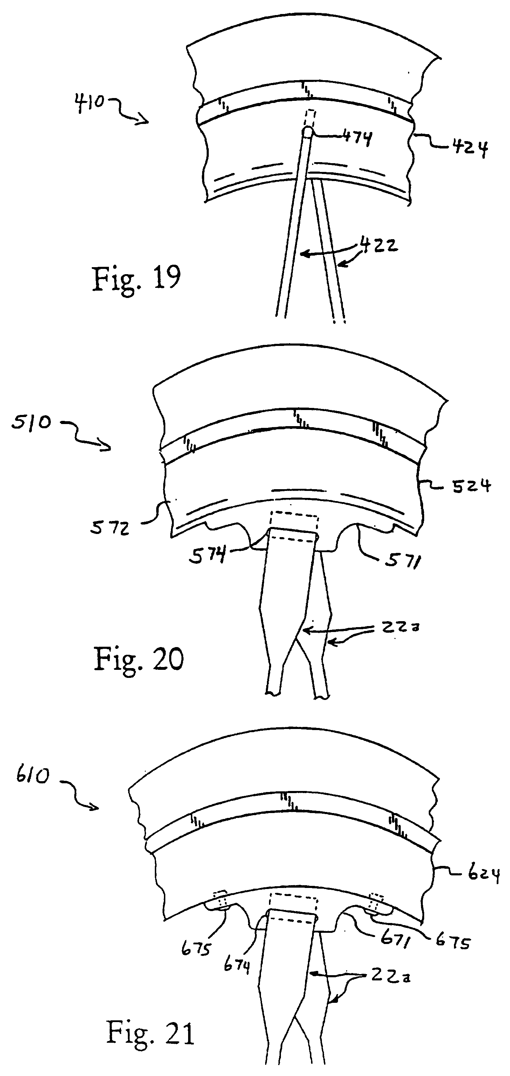

As seen in Figure 19, a partial elevational view of a bicycle wheel 410 with a modified rim and spoke connection is illustrated. Basically, in this embodiment, the cross-section of the spokes 422 (only one shown) have been changed to be substantially circular along its entire length, and the openings 474 in the rim 424 has also been made substantially circular. Of course, it will be apparent to those skilled in the art from this disclosure that the spokes 422 can have other cross-sections with the openings 474 in the rim 424 corresponding to the cross-section of the spokes 422.

In view of the similarities between this embodiment and the prior embodiments of the present invention, this embodiment will not be discussed or illustrated in detail herein. Rather, the description of the prior embodiments should apply to this embodiment.

### Ninth Embodiment

As seen in Figure 20, a partial elevational view of a bicycle wheel 510 with a modified rim 524 is illustrated for use with spokes 22a of the first embodiment. In this ninth embodiment, the rim 524 is provided with a plurality of protrusions 571 (only one shown) which form a part of the attachment portions 572 of the rim 524. Protrusions 571 are equally spaced about the inner periphery of bicycle wheel 510 and each has a pair of openings 574 for receiving a pair of spokes 22a. Accordingly, the spokes 22a and rim 524 are coupled together in substantially the same manner as discussed above pertaining to the first embodiment of the present invention.

In view of the similarities between this embodiment and the prior embodiments of the present invention, this embodiment will not be discussed or illustrated in detail herein. Rather, the description of the prior embodiments should apply to this embodiment.

### Tenth Embodiment

As seen in Figure 21, a partial elevational view of a bicycle wheel 610 in accordance with a tenth embodiment of the present invention is illustrated in which the rim 624 of the bicycle wheel 610 has a plurality of attachment members 671 (only one shown) which form a part of attachment portions 672. Attachment members 671 are fastened to the rim 624 by fasteners 675. Attachment members 671 have a pair of openings 674 for connecting a pair of spokes 22a thereto. In other words, this embodiment illustrates that the rim 624 can be constructed of additional parts. Moreover, the spoke attachment portions 672 can be constructed of a different material from the material of the remainder of rim 624 to provide a shock absorbing type affect if needed and/or desired.

In any event, in view of the similarities between this embodiment and the prior embodiments, the interconnection of the spokes to the attachment portions will not be discussed or illustrated in detail herein.

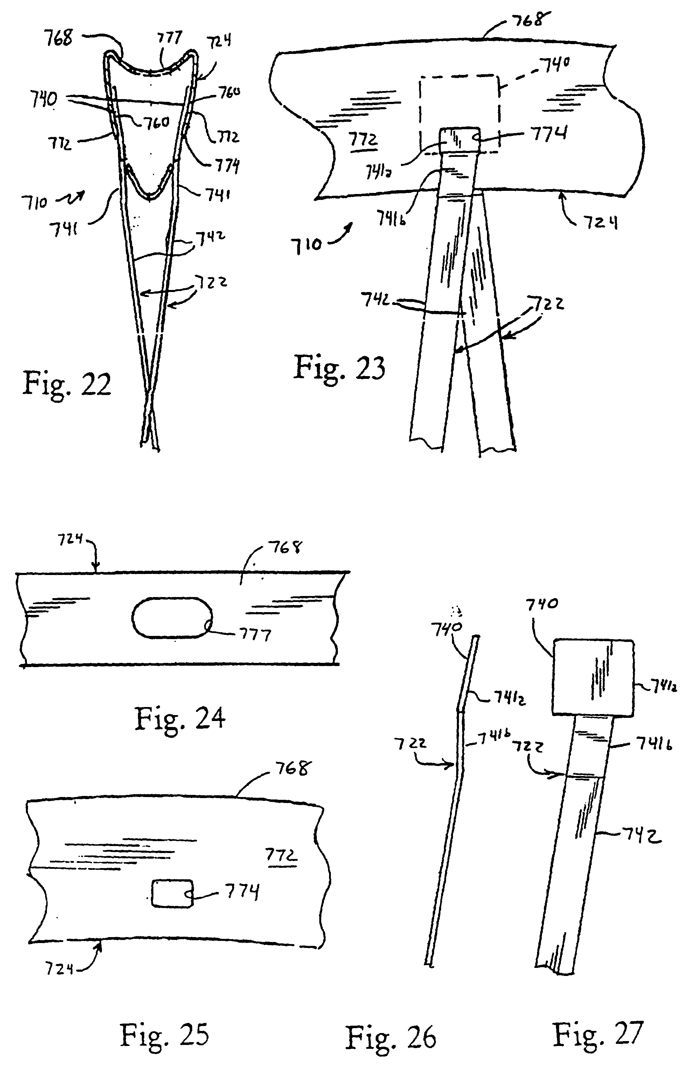

Referring now to Figures 22-27, which do not show embodiments in accordance with the present invention. In this embodiment, rim 724 has a plurality of openings 774 for connecting spokes 722 thereto in a somewhat similar manner as in the first embodiment. Openings 774 are preferably equally spaced about the periphery of rim 724 and are substantially rectangular in shape. Similarly to the first embodiment, rim 724 preferably has six or eight openings 774 on each sidewall of rim 724 such that twelve or sixteen spokes 722 are connected between rim 724 and the hub.

The outer annular surface 768 of rim 724 which receives the pneumatic tire has a plurality of access slots 777 which are sized to receive spokes 722 therethrough as explained below. Accordingly, openings 777 of outer annular surface 768 are positioned adjacent to openings 774 which are located on the sidewalls or attachment portions 772 of rim 724.

Openings 774 preferably have a radial width of approximately 5.0 millimetres. The circumferential widths of openings 774 are preferably sized to be substantially equal to or slightly larger than the circumferential width of the portion of the spokes 722 located therein.

As best seen in Figures 22 and 23, each of the spokes 722 has an outer end portion or spoke head 740 which is received in the annular hollow area of rim 724. Each spoke 722 also has a centre portion 742 extending inwardly from outer end portion 740 towards the hub and has an inner end portion or connector (not shown) attached to its free end which is in turn adapted to be coupled to a bicycle wheel hub in the manner shown in the preceding embodiments. Preferably, spoke 722 is constructed of a sheet material having a substantially uniform thickness.

The outer end portion or spoke head 740 has a first enlarged section 741a and a narrower second section 741b such that each spoke 722 is secured within rim 724 by its first section 741a of outer portion 740 engaging opening 774 of rim 724 and second section 741b of outer portion 740 passing through opening 774 of rim 724. In other words, the circumferential or transverse width of first section 741a of outer end portion 740 is sized such that it passes through opening 777 of the outer annular surface 768, but is larger than the openings 774 in the attachment portions 772 of rim 724 to retain spoke 722 to rim 724.

First section 741a of outer end portion 740 is also spot welded or adhesively secured to the inner surface of attachment portions 772 of rim 724 by a spot weld or adhesive 760 in a similar manner as discussed above. Of course, a fastener such as a rivet or a bolt and nut or the like can be used instead of spot weld or adhesive 760 or in conjunction therewith. Accordingly, each spoke 722 is secured within rim 724 by its outer portion 740 engaging opening 774 as well as due to the adhesive or spot weld 760 or a fastener. Of course, it will be apparent to those skilled in the art from this disclosure that the adhesive or spot weld could be eliminated if needed and/or desired.

To assist in spot welding or adhesively securing outer end portion 740 to the inner surface of rim 724, the outer end portion 740 should be a substantially flat member or bent to follow the interior contour of rim 724. In any event, the outer end portion 740 has a large attachment area for securing to the sidewall or attachment portion 724 of rim 724 so that any stress applied to rim 724 is distributed over a larger area of rim 724. In this embodiment, spoke 722 is preferably constructed of a flat sheet material that forms outer end portion 740, first centre section 741 and second centre portion 742. The inner end portion (not shown) which is coupled to the inner end of centre portion 742 preferably has a connection assembly similar to that shown in Figure 8a such that spoke 722 can be placed under tension.

### Eleventh Embodiment

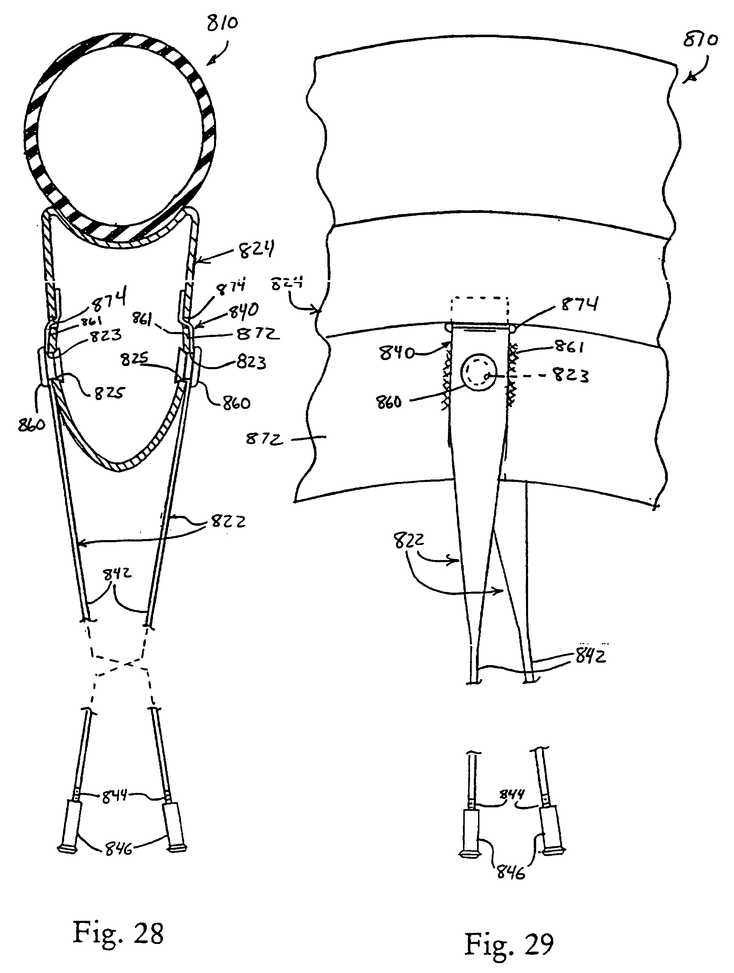

Referring now to Figures 28-34, a bicycle wheel 810 with a slightly modified rim and spoke connection is illustrated in partial cross-sectional view and side elevational view. In this embodiment, the shapes of spokes 822 and rim 824 have been slightly changed. In particular, spokes 822 have been provided with holes 823 and rims 824 have been provided with holes 825 for receiving rivets 860. In addition to rivets 860, spokes 822 can be further coupled to rim 824 via adhesive or cement 861. Alternatively, rivets 860 can be eliminated to use only an adhesive or nothing at all as mentioned in some of the prior embodiments.

In view of the similarities between this embodiment and the prior embodiments of the present invention, this embodiment will not be discussed or illustrated in detail herein. Rather, the description of the previous embodiments explaining the present invention applies to this embodiment to the extent that it does not contradict the drawings and/or the description thereof. For example, the precise construction of spokes 822 can be identical to spokes 22a of the first embodiment except for the addition of holes 823 for rivets 860.

Similar to the first embodiment, each of the spokes 822 has an outer end portion or spoke head 840 which extends into the hollow portion of rim 824 via openings 874, a substantially straight centre portion 842 extending inwardly from outer end portion 840 and an inner end portion 844 located radially inwardly of centre portion 842 such that the inner end portion 844 is coupled to the hub in the same manner as seen in Figure 3. Preferably, outer end portion 840, centre portion 842 and inner end portion 844 are constructed as a one-piece, unitary member with a connection member or spoke nipple 846 coupled to the inner end portion 844 for connection to hub 20 as seen in the first embodiment.

Bicycle rim 824 is similar to the rims discussed above, except that it includes a plurality of holes 825 which are equally spaced around each side of the circumference of rim 824 to receive rivets 860. Bicycle rim 824 has an outer annular surface adapted to receive a tire thereon and first and second annular spoke attachment portions coupled to the outer annular surface and extending radially inwardly from the first and second annular spoke attachment portions. The first and second annular spoke attachment portions are coupled together at their inner ends by an inner annular surface. The first and second annular spoke attachment portions face in opposite directions with the spoke openings 874 formed therein and the fastener openings 825 positioned adjacent the spoke openings 874. The outer annular surface, the first and second annular spoke attachment portions and the inner annular surface are preferably integrally formed as a one-piece, unitary member with an annular hollow area formed therebetween.

Rim 824 of this embodiment is somewhat similar to rim 324 of Figures 15 through 18 in that the rim 824 has a bulged section 872. The exterior surfaces which form bulged section 872 are located radially inwardly of spoke openings 874, while fastener openings 825 are formed along bulged section 872. Bulged section 872 bows outwardly such that spokes 822 are bent slightly around bulged section 872 when spokes 822 are coupled between hub 20 and rim 824. In other words, bulged section 872 has an axial width which is larger than the axial width of rim 824 along said spoke openings 874. Preferably, bulged section 872 is formed by oppositely facing convex sections of the exterior surfaces of rim 824. The fastener openings 825 are formed along the convex sections of exterior surfaces of bulged section 872.

Spoke openings 874 are preferably substantially elongated, thin slot extending in a substantially circumferential direction along the first and second annular spoke attachment portions. The spoke openings 874 are preferably located at least five millimetres radially outwardly from the inner annular surface, and having a radial width in the range of about 0.5 millimetres to about 5.0 millimetres.

It will be apparent to those skilled in the art from this disclosure that wheel 810 can be either a twelve spoked wheel as in Figure 1 or a sixteen spoked wheel as seen in Figure 2. Of course, it will be apparent to those skilled in the art from this disclosure that wheel 810 can be either a front or rear wheel having fewer or more spokes than illustrated in Figures 1 or 2.

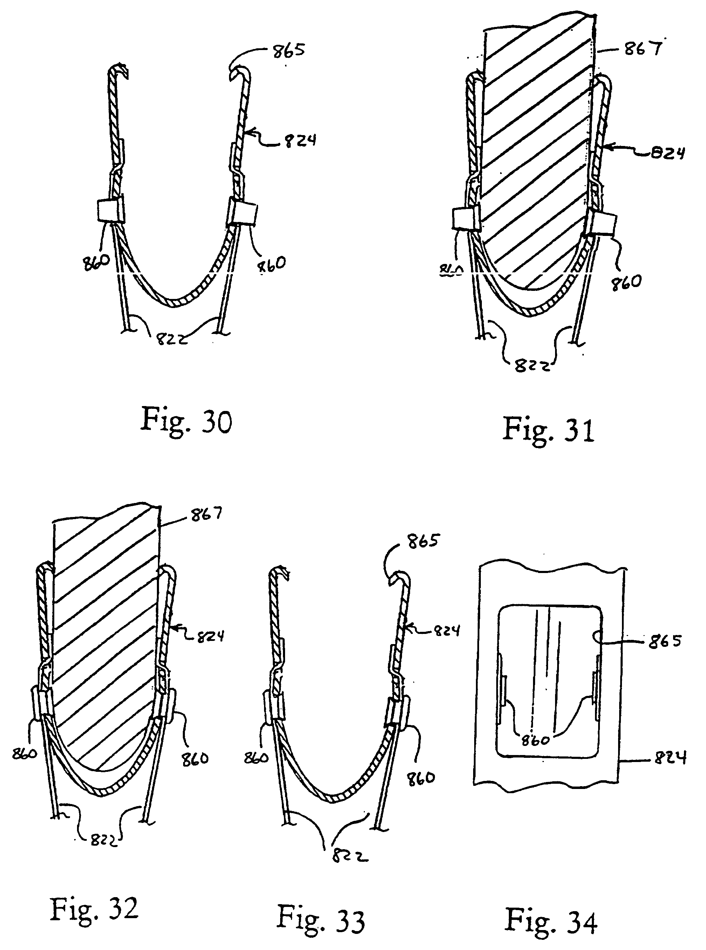

As seen in Figures 30-34, spokes 822 are fixedly secured to rim 824 using an anvil or support member 867 which is inserted through the access openings 865 formed in the upper surface of rim 824. In other words, a plurality of access openings 865 are formed in the upper surface of rim 824 for accessing the interior hollow portion of rim 824 such that rivets 860 can be inserted through the holes 823 and 825 of the spokes 822 and rim 824, respectively. Once the rivets 860 are inserted through the holes 825 and 823, the inner ends of rivets 860 are supported by anvil 867 which is inserted through access opening 865 of rim 824 as seen in Figure 31. Next, the rivets 860 are hammered or otherwise deformed so as to form a headed portion which engages the outwardly facing surface of spokes 822 to fixedly secure spokes 822 to rim 824 as seen in Figure 32. In other words, anvil 867 supports the rivets 860 from being pushed inwardly into the hollow area of rim 824 during the deformation of rivets 860. Once the rivets 860 are completely deformed, spokes 822 are fixedly secured to rim 824 as seen in Figures 33 and 34. Of course, it will be apparent to those skilled in the art from this disclosure that other types of rivets could be utilized. For example, a pop-rivet could be utilized, in which case access opening 865 and anvil 867 would not be necessary.

### Twelfth Embodiment

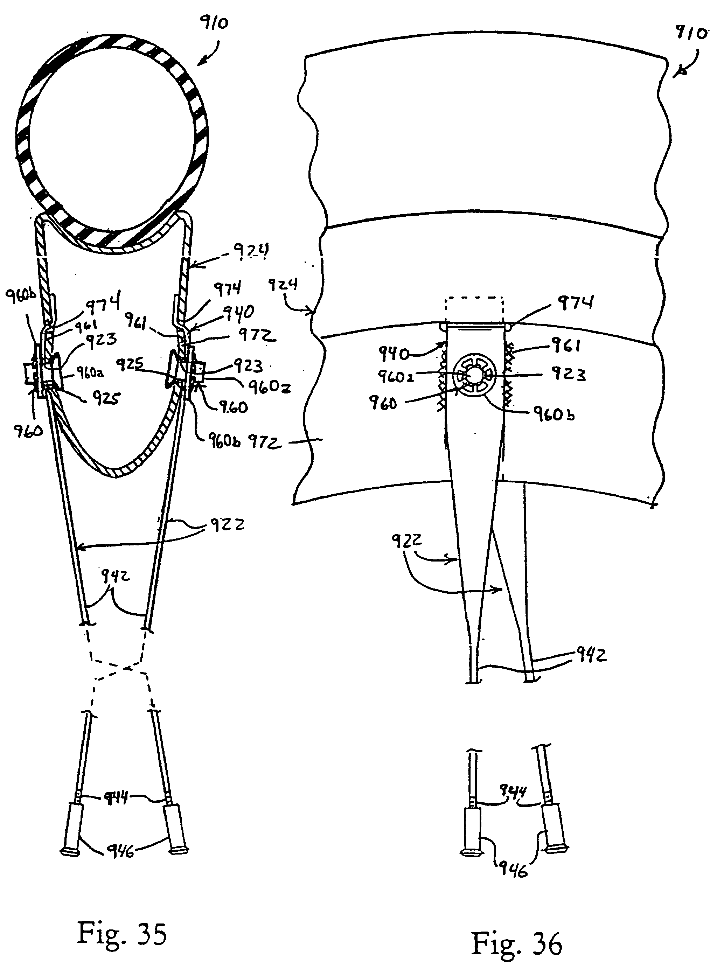

Referring now to Figures 35 and 36, a bicycle wheel 910 with a slightly modified rim and spoke connection is illustrated in partial cross-sectional view and side elevational view. In this embodiment, the shapes of spokes 922 and rim 924 have been slightly changed. In particular, spokes 922 have been provided with holes 923 and rims 924 have been provided with holes 925 for receiving fasteners 960. In addition to fasteners 960, spokes 922 can be further coupled to rim 924 via adhesive or cement 961. Alternatively, fasteners 960 can be eliminated to use only an adhesive or nothing at all as mentioned in some of the prior embodiments.

In view of the similarities between this embodiment and the prior embodiments of the present invention, this embodiment will not be discussed or illustrated in detail herein. Rather, the description of the previous embodiments explaining the present invention applies to this embodiment to the extent that it does not contradict the drawings and/or the description thereof. For example, the precise construction of spokes 922 can be identical to spokes 22a of the first embodiment except for the addition of holes 923 for fasteners 960.

In this embodiment, fasteners 960 each includes a pin 960a and a self-locking ring or retaining ring 960b. Specifically, pin 960a is a headed pin with a shaft portion and a head portion. The shaft portion of pin 960a is inserted through one of the holes 925 in rim 924 and through one of the holes 923 in one of the spokes 922 such that the head portion of the pin 960a abuts against the internal surface of rim 924. An anvil, like in the prior embodiment, can be utilized to hold pins 960a in place. Now, retaining ring 960b is pushed onto the shaft portion of pin 960a to fixedly secure spoke 922 to rim 924. The shaft portion of pin 960a can be smooth or can include one or more ribs or grooves for more securely fastening retaining ring 960b to the shaft portion of pin 960a.

It will be apparent to those skilled in the art from this disclosure that fastener 960 could be a nut and bolt or some other type of fastener as needed and/or desired. For example, the fastening ring 960b could be a C-shaped retaining ring for engaging a groove in the shaft portion of the pin.

Similar to the first embodiment, each of the spokes 922 has an outer end portion or spoke head 940 which extends into the hollow portion of rim 924 via openings 974, a substantially straight centre portion 942 extending inwardly from outer end portion 940 and an inner end portion 944 located radially inwardly of centre portion 942 such that the inner end portion 944 is coupled to the hub in the same manner as seen in Figure 3. Preferably, outer end portion 940, centre portion 942 and inner end portion 944 are constructed as a one-piece, unitary member with a connection member or spoke nipple 946 coupled to the inner end portion 944 for connection to hub 20 as seen in the first embodiment.

Rim 924 of this embodiment is somewhat similar to rim 324 of Figures 15 through 18 and rim 824 of Figures 28-34 in that the rim 924 has a bulged section 972. Bulged section 972 bows outwardly such that spokes 922 are bent slightly around bulged section 972 when spokes 922 are coupled between hub 20 and rim 924. Thus, the description of rims 324 and 824 applies to this embodiment to the extent that they do not contradict the drawings and/or the description thereof.

Rim 924 is similar to the rims discussed above, except that it includes a plurality of holes 925 which are equally spaced around each side of the circumference of rim 924 to receive fasteners 960. Moreover, it will be apparent to those skilled in the art from this disclosure that wheel 910 can be either a twelve spoked wheel as in Figure 1 or a sixteen spoked wheel as seen in Figure 2. Of course, it will be apparent to those skilled in the art from this disclosure that wheel 910 can be either a front or rear wheel having fewer or more spokes than illustrated in Figures 1 or 2.

### Thirteenth Embodiment

Spokes 22a extend from the left and right ends of the hub 20a towards the rim 24a. In other words, in a twelve spoke embodiment, six spokes extend substantially outwardly from the right end of hub 20a to rim 24a and six spokes extend substantially outwardly from the left end of hub 20a to rim 24a. Spokes 22a are preferably tangentially arranged relative to hub 20a as they extend outwardly therefrom. Of course, spokes 22a can be arranged in a more radial direction if needed and/or desired.

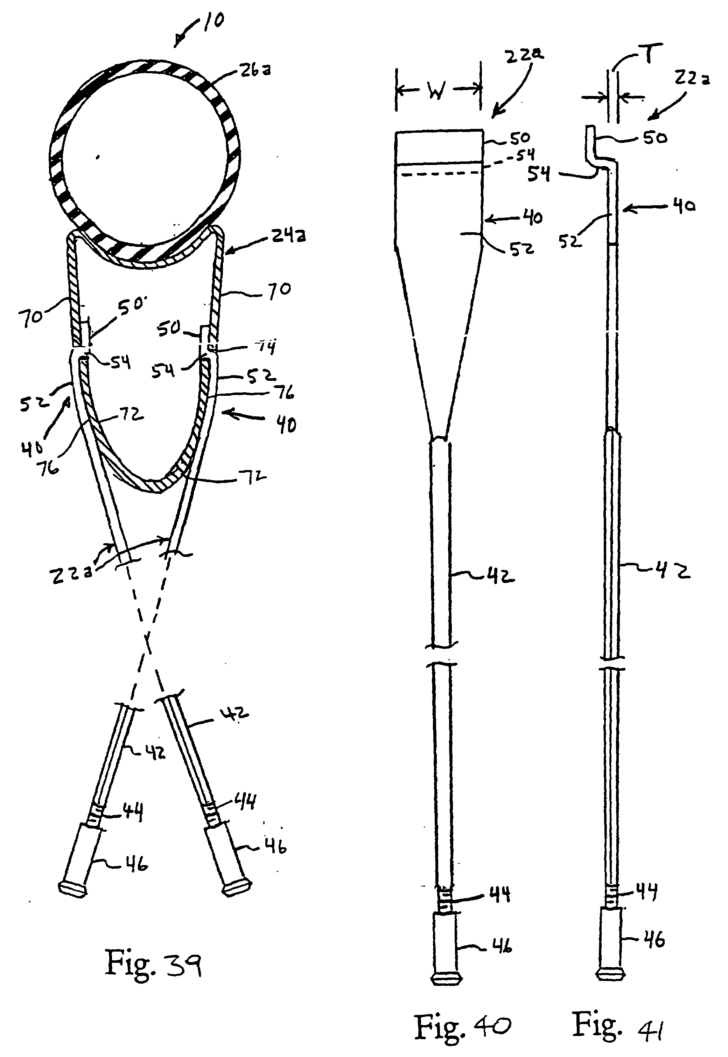

As seen in Figures 39-42, each of the spokes 22a has an outer end portion 40, a center portion 42 and an inner end portion 44. Outer end portion or spoke head 40 is coupled to rim 24a. Straight center portion 42 is located radially inwardly of outer end portion 40, and inner end portion 44 located radially inwardly of the center portion 42. Center portion 42 is coupled to hub 20a in a relatively conventional manner. Preferably, outer end portion 40, center portion 42 and inner end portion 44 are constructed as a unitary, one-piece member with spoke nipples 46 theadedly coupled to the inner end portion 44 of each of the spokes 22a for connection to hub 20a.

As shown in Figures 39-42, outer end portion 40 of each spoke22a has a first predetermined width W and a first predetermined thickness T. The width W of outer end portion 40 of each spoke22a extends in a first direction, while the thickness T of outer end portion 40 of each spoke22a extends in a second direction, which is substantially perpendicular to the first direction. The outer end portion 40 has a width W that is preferably at least ten times the thickness T of the outer end portion 40. Preferably, outer end portion 40 has a width W that is approximately thirty times the thickness T of the outer end portion 40. For example, the outer end portions 40 of spokes 22a can have widths of approximately 15.0 millimeters and thicknesses of approximately 0.5 millimeters.

In this embodiment, outer end portions 40 of spokes 22a have an elongated cross section such as a rectangular or an elongated elliptical cross section, while center portions 42 and inner end portions 44 each have a circular or elliptical cross section. Of course, it will be apparent to those skilled in the art that the entire length of spokes 22a can be substantially uniform along its entire cross section if needed and/or desired. It will also be apparent to those skilled in the art that constant cross section spokes can be utilized or spokes with a varying cross section can be utilized as needed and/or desired. For example, spokes with an elliptical cross section could be used in accordance with the present invention. In any event, outer end portion 40 has a width W that is preferably at least ten times the thickness T of the outer end portion 40. Preferably, outer end portion 40 has a width W that is at least thirty times the thickness T of the outer end portion 40.

As seen in Figures 39-42, outer end portions 40 of spokes 22a are bent to form first sections 50 at the free ends of spokes 22a which are offset from the second sections 52. This offsetting of the first and second section 50 and 52 forms a bend or offset section 54 therebetween, which retains the spoke 22a to rim 24a as discussed below. Preferably, second sections 52 of each spoke 22a lies substantially in the same plane as its respective center portion. First section 50, on the other hand, lies in a plane, which is spaced from the plane of the second section 52 and preferably parallel thereto. Of course, it will be apparent to those skilled in the art from this disclosure that first section 50 can be bent or formed to have a different shape and/or cross section than the illustrated shapes and cross sections. In any event, the shapes and cross sections of first section 50, second section 52 and bend or offset section 54 of each spoke should be configured to prevent axial movement of the spoke relative to rim 24a when the spoke is in the installed position.

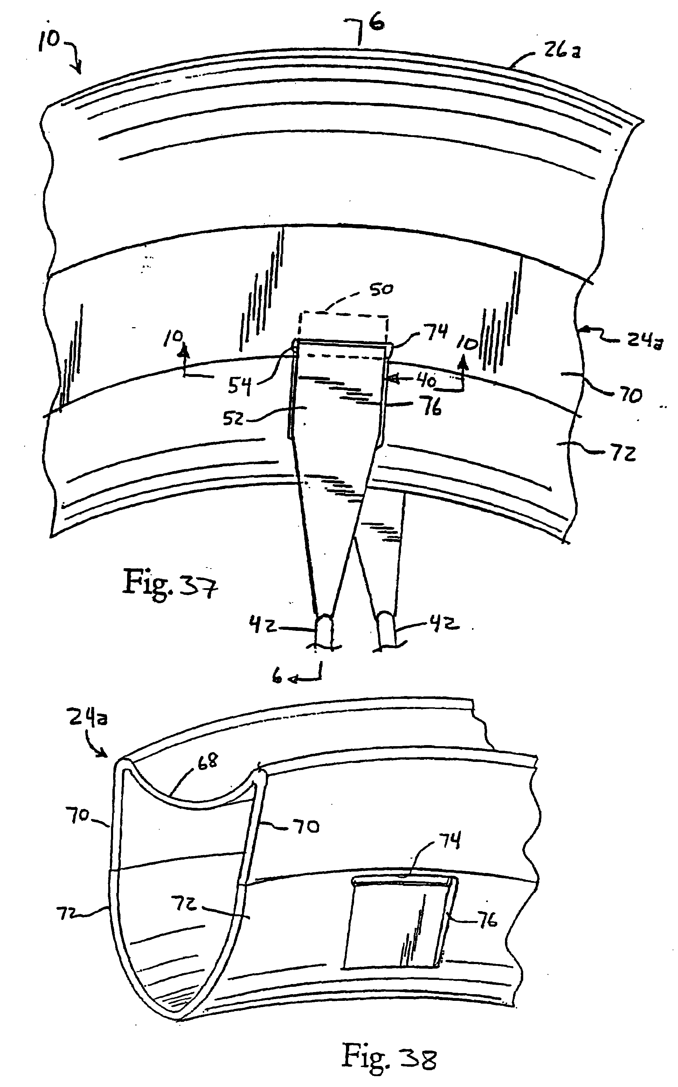

As seen in Figures 37 to 42, first section 50 of each spoke 22a has a first contact surface 56 facing in a first direction to engage an inner surface of rim 24a. Second section 52 of each spoke 22a has a second contact surface 58 facing in a second direction to engage the outer surface of rim 24a. The lateral spacing between first contact surface 56 of first section 50 and second contact surface 58 is preferably slightly larger than the thickness of rim 24a. Accordingly, when spokes 22a are installed in rim 24a, spokes 22a engage rim 24a to prevent any substantial movement therebetween.

Optionally, additional fastening means such as an adhesive or cement or the like can be utilized to more firmly and fixedly secure outer end portions 40 of spokes 22a to the spoke attachment portions of the annular rim 24a. The term "adhesive" as used herein, including the claims, includes any compound or material which can be used to secure to materials together including cements and the like. Moreover, fasteners or fastening means (not shown), such as spot welding, rivets or threaded fasteners or the like, can be utilized if needed and/or desired. Such fasteners can extend through either first contact surface 56 or second contact surface 58, and into the side portions of rim 24a. In addition, fasteners can be used in conjunction with adhesive or the like.

Center portions 42 of spokes 22a are illustrated as being substantially straight wire type spokes with a substantially elliptical cross section. However, it will be apparent to those skilled in the art from this disclosure that center portions 42 of spokes 22a can be configured to have other types of cross sections and/or shapes. For example, center portions 42 can be more rectangular in cross section with the shape being uniformed along the entire length of center portion 42. Alternatively, the cross section of center portion 42 can vary along its length such that the cross section of center portion 42 becomes wider as it approaches hub 24a. In other words, the thickness and/or width of center portion 42 can be either uniformed or varied as needed and/or desired.

Inner end portions 44 of spokes 22a are threaded for receiving conventional spoke nipples 46 thereon. More specifically, inner end portions 44 of spokes 22a are inserted through one end of bores 34a of hub 20a, and then spoke nipples 46a are inserted through the other end of bores 34a. The headed or flanged portion of the spoke nipples 46 engage an internal abutment surface of bores 34 to fixedly secure inner end portions 44 of spokes 22a to hub 20a. Accordingly, spokes 22a can be tightened in a substantially conventional manner between hub 20a and rim 24a to secure inner end portions 44 of spokes 22a thereto.

Rim 24a is a so-called deep rim in which the rim height is greater than the rim width and is designed to have pneumatic tire 26a fastened thereto by a tire cement. Of course, rim 24a can have other shapes to accommodate other types of tires as needed and/or desired. Annular rim 24a is constructed of a substantially rigid material, such as those materials, which are well known in the art. For example, rims 24a can be constructed of any suitable metallic material, such as plated steel, stainless steel, aluminum or titanium, as well as other non-metallic materials, such as a carbon fiber composite, which can be utilized for a bicycle wheel.

Rim 24a is substantially circular as seen in side elevation (Figure 1), and has an outer annular surface 68, a pair of annular braking portions 70 and a pair of annular spoke attachment portions 72. The outer annular surface 68 is adapted to receive pneumatic tire 26a thereon. The annular braking portions 70 are located on the sides of rim 24a. The annular spoke attachment portions 72 are also located on the sides of rim 24a, radially inward of annular braking portions 70 as seen in Figure 38. Rim 24a is a tubular member with a hollow, annular inner area. It will be apparent to those skilled in the art that the shape of outer annular surface 68 of rim 24a could be modified to accommodate different types of tires such as "clinchers" as needed and/or desired. In this embodiment, outer annular surface 68 of rim 24a is designed for use with "tubular" or "sew-up" type tires which are cemented to outer annular surface 68.

Braking portions 70 are preferably substantially flat, circular surfaces which are designed to be engaged with the brake pads of a brake device for slowing or stopping rotation of wheel 10. Braking portions 70 are preferably parallel to each other and located between outer annular surface 68 and one of the spoke attachment portions.

Spoke attachment portions 72 are located radially inwardly relative to outer annular surface 68 and braking portions 70 of the rim 24a. Preferably, spoke attachment portions 72 are angled towards each other to form a substantially V-shaped section of rim 24a with its apex pointed towards the center of wheel 10. Each spoke attachment portion 72 has a plurality of openings 74 for receiving first sections 50 of the spokes 22a therein and a plurality of radial recesses 76 for receiving at least parts of outer portions 40 therein.

Openings 74 and radial recesses 76 are preferably equally spaced about spoke attachment portions 72, with radial recesses 76 being located radially inwardly of openings 74. In this embodiment, the plurality of openings 74 are preferably elongated openings or slots which are sized and shaped to receive the outer end portions of the spokes therein. Elongated openings 74 distribute the forces on rim 24a over a greater area than ordinary round spokes such that stress fracturing and/or tearing of rim 24a is minimized. Preferably, openings 74 have circumferential lengths of at least approximately 5.0 millimeters. For example, if outer end portions 40 of spokes 22a have widths of approximately 15.0 millimeters and thicknesses of approximately 0.5 millimeters, then openings 74 preferably have circumferential lengths of approximately 17.0 millimeters and radial widths of approximately 0.7 millimeters.

Preferably, openings 74 are spaced from the innermost edge of rim 24a by at least 5.0 millimeters to increase the resistance of damage to rim 24a. Preferably, the radial distance from the inner edge of openings 74 to the innermost edge of rim 24a is at least one third the circumferential length of opening 74. The farther openings 74 can be spaced from the inner peripheral edge of rim 24a, the stronger the connection between spokes 22a and rim 24a. The radial widths of openings 74a are preferably substantially equal to or slightly greater than the widths of spokes 22a so that debris, dirt and the like does not enter the hollow area of rim 24a.

In a preferred embodiment, the thickness of spokes 22a at first end sections 50 is in the range of approximately 0.5 millimeters to approximately 3.0 millimeters. Accordingly, openings 74 can have a radial width in the range of approximately 0.5 millimeters to approximately 5.0 millimeters. For example, if the thickness of first end section 50 of each spoke 22a is approximately 1.0 millimeters then the radial width of each opening 74 can be approximately 1.2 millimeters.

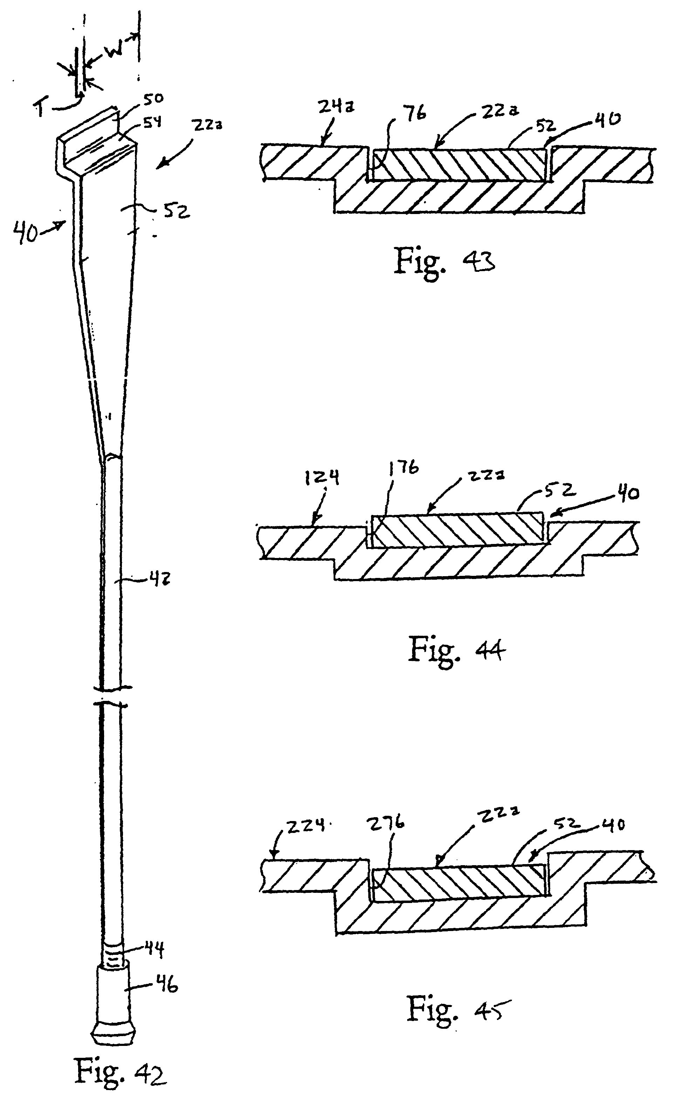

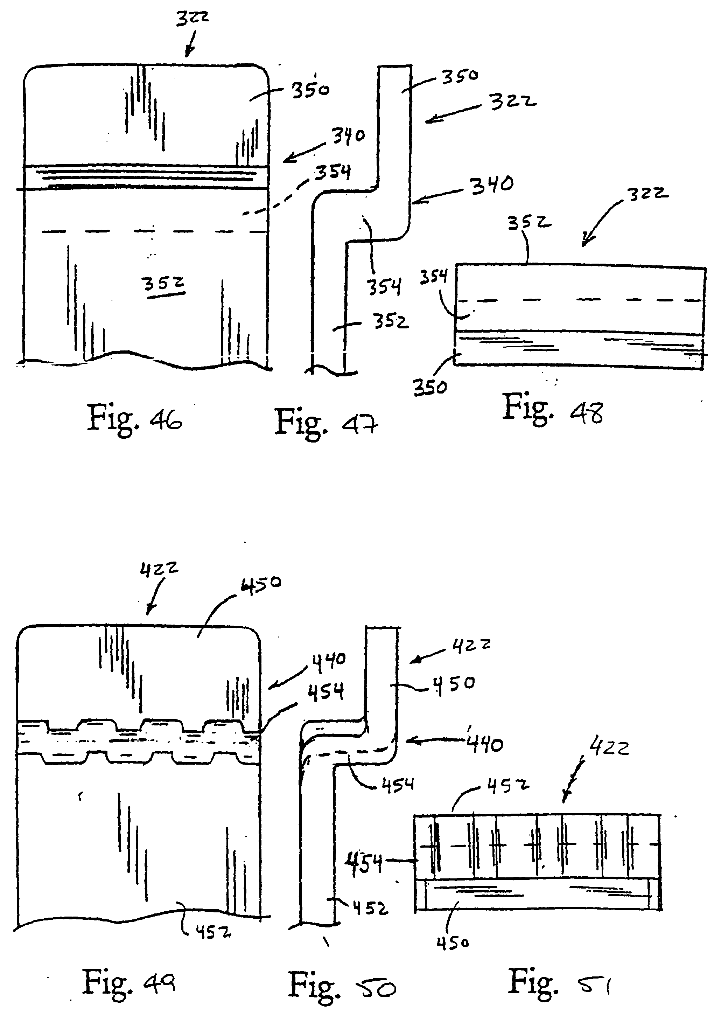

As seen in Figure 43, recesses 76 have axial depths, which are preferably substantially equal to the thickness of second section 52 of outer portion 40. This arrangement provides a more aerodynamic design to reduce air resistance.

In preferred embodiments of the present invention, first end sections 50 and bend sections 54 are configured to freely pass through openings 74 of rim 24a. Thus, this configuration makes it unnecessary to have either center portion 42 or inner end portion 44 of each spoke pass through openings 74. Moreover, openings 74 are preferably configured to be substantially the same shape as the cross section of bend sections 54 of spokes 22a and only slightly larger as mentioned above. Thus, when spokes 22a are in the installed position, openings 74 limit circumferential movement of the bend sections 54 therein. In particular, the shapes and cross sections of first section 50, second section 52 and bend section 54 of each spoke should be configured to prevent axial movement of the spoke relative to rim 24a when the spoke is in the installed position.

### Fourteenth Embodiment

As seen in Figure 44, a partial cross sectional view of a bicycle rim 124 is illustrated in accordance with the present invention. This embodiment is substantially similar to the previous embodiment of Figures 37-43, except that the depth each of the recesses 176 has been decreased. Accordingly, the outer end portions 140 of the spokes 122 are not flush with the outer surfaces of the spoke attachment portions 172. Rather, the outer end portions 140 of the spokes 122 protrude outwardly from the outer surface of the spoke attachment portions 172. In particular, recesses 176 of rim 124 have axial depths, which are less than the thicknesses of second sections 152 of outer portions 140. This arrangement provides an aerodynamic design, which reduces air resistance.

In view of the similarities of this embodiment with the previous embodiment of the present invention, this embodiment will not be discussed or illustrated in further detail herein. Rather, the description of the parts of the previous embodiment explaining the present invention applies to this embodiment.

### Fifteenth Embodiment

As seen in Figure 45, a partial cross-sectional view of a bicycle rim 224 is illustrated in accordance with the present invention. This embodiment is substantially similar to the embodiment of Figures 37-43, except that the depth each of the recesses has been increased. Accordingly, the outer end portions 240 of the spokes 222 are not flush with the outer surfaces of the spoke attachment portions 272. Rather, the outer end portions 240 of the spokes 222 are recessed from the outer surface of spoke attachment portion 272. In particular, recesses 276 of rim 224 have axial depths, which are greater than the thicknesses of second sections 252 of outer portions 240. This arrangement provides an aerodynamic design, which reduces air resistance.

In view of the similarities of this embodiment with the seventeenth embodiment of the present invention, this embodiment will not be discussed or illustrated in detail herein. Rather, the description of the parts of the seventeenth embodiment explaining the present invention applies to this embodiment.

### Sixteenth Embodiment

Referring now to Figures 46-48, a modified spoke 322 is illustrated in accordance with another aspect of the present invention. Spokes 322 is designed to be used with either wheel 10 or 12. In other words, spoke 322 extends between hub 20a or 20b and rim 24a or 24b. Similar to the seventeenth embodiment, spoke 322 has an outer end portion 340, a substantially straight center portion (not shown) and an inner end portion (not shown). Preferably, outer end portion 340, center portion and inner end portion are constructed as a one-piece, unitary member with a connection member or spoke nipple coupled to inner end portion for connection to hub 20a or 20b.

Outer end portion 340 of spokes 322 is bent to form a first section 350 and second sections 352 at the free end of spoke 322. This offsetting of the first and second section 350 and 352 forms a bend or offset section 354 therebetween, which retains the spoke 322 to rim 24a or 24b. In other words, first section 350 is offset from the second section 352 by offset section 354, which extends substantially perpendicular to first and second sections 350 and 352. Preferably, second sections 352 of each spoke 322 lies substantially in the same plane as its respective center portion. First section 350, on the other hand, lies in a plane, which is spaced from the plane of the second section 352 and preferably parallel thereto. Of course, it will be apparent to those skilled in the art from this disclosure that first section 350 can be bent or formed to have a different shape and/or cross section than the illustrated shapes and cross sections. In any event, the shapes and cross sections of first section 350, second section 352 and bend section 354 of each spoke should be configured to prevent axial movement of the spoke 322 relative to rim 24a or 24b, when the spoke 322 is in the installed position.

Since spoke 322 is normally in tension, bend or offset section 354 applies a force to rim 24a or 24b and vice-a-versa. Thus, in this embodiment, bend or offset section 354 is thicker than either first section 350 or second section 352.

Optionally, additional fastening means such as an adhesive or cement or the like can be utilized to more firmly and fixedly secure outer end portions 340 of spokes 322 to the spoke attachment portions of the annular rim 24a or 24b. The term "adhesive" as used herein, including the claims, includes any compound or material which can be used to secure to materials together including cements and the like. Moreover, fasteners or fastening means (not shown), such as spot welding, rivets or threaded fasteners or the like, can be utilized if needed and/or desired. In addition, fasteners can be used in conjunction with adhesive or the like.

In view of the similarities of this embodiment with prior embodiments of the present invention, this embodiment will not be discussed or illustrated in detail herein. Rather, the description of the previous embodiments explaining the present invention applies to this embodiment.

### Seventeenth Embodiment

Referring now to Figures 49-51, a modified spoke 422 is illustrated in accordance with another aspect of the present invention. Spokes 422 is designed to be used with either wheel 10 or 12. In other words, spoke 422 extends between hub 20a or 20b and rim 24a or 24b. Similar to the seventeenth embodiment, spoke 422 has an outer end portion 440, a substantially straight center portion (not shown) and an inner end portion (not shown). Preferably, outer end portion 440, center portion and inner end portion are constructed as a one-piece, unitary member with a connection member or spoke nipple coupled to inner end portion for connection to hub 20a or 20b.

Outer end portion 440 of spokes 422 is bent to form a first section 450 and second sections 452 at the free end of spoke 422. This offsetting of the first and second section 450 and 452 forms a bend or offset section 454 therebetween, which retains the spoke 422 to rim 24a or 24b. In other words, first section 450 is offset from the second section 452 by offset section 454, which extends substantially perpendicular to first and second sections 450 and 452. Preferably, second sections 452 of each spoke 422 lies substantially in the same plane as its respective center portion. First section 450, on the other hand, lies in a plane, which is spaced from the plane of the second section 452 and preferably parallel thereto. Of course, it will be apparent to those skilled in the art from this disclosure that first section 450 can be bent or formed to have a different shape and/or cross section than the illustrated shapes and cross sections. In any event, the shapes and cross sections of first section 450, second section 452 and bend section 454 of each spoke should be configured to prevent axial movement of the spoke 422 relative to rim 24a or 24b, when the spoke 422 is in the installed position.

Since spoke 422 is normally in tension, bend or offset section 454 applies a force to rim 24a or 24b and vice-a-versa. Thus, in this embodiment, bend or offset section 454 is corrugated for additional strength. By corrugating offset section 454, the effective thickness of offset section 454 is greater than the effective thickness of either first section 450 or second section 452.

Optionally, additional fastening means such as an adhesive or cement or the like can be utilized to more firmly and fixedly secure outer end portions 440 of spokes 422 to the spoke attachment portions of the annular rim 24a or 24b. The term "adhesive" as used herein, including the claims, includes any compound or material which can be used to secure to materials together including cements and the like. Moreover, fasteners or fastening means (not shown), such as spot welding, rivets or threaded fasteners or the like, can be utilized if needed and/or desired. In addition, fasteners can be used in conjunction with adhesive or the like.

In view of the similarities of this embodiment with prior embodiments of the present invention, this embodiment will not be discussed or illustrated in detail herein. Rather, the description of the previous embodiments explaining the present invention applies to this embodiment.

While particular embodiments have been chosen to illustrate the present invention, it will understood by those skilled in the art that various changes and modifications can be made herein without departing from the scope of the invention as defined in the appended claims.

## Claims

1. A bicycle spoke, comprising:
an outer end portion (40) received within an opening (74) of a rim (24a);
a center portion (42) coupled to said outer end portion (40) and located radially inwardly of said outer end portion (40); and
an inner end portion (44) coupled to said center portion (42) and located radially inwardly of said center portion (42),
said outer end portion (40) having a first section (50) forming a free end, a second section (52) coupled to said center portion (42) and a bend section (54) extending between said first and second sections (50,52), said first section (50) having a first cross-section, said second section (52) having a second cross-section and said bend section (54) having a third cross-section, with said first cross-section of said first section (50) being no larger in cross-section than said third cross-section of said bend section (54);
**characterised in that** said first section (50) lies in a first plane offset from a second plane in which said second section (52) lies, said first and second planes being substantially parallel.

2. A bicycle spoke according to claim 1, wherein
said inner end portion (44) is threaded.

3. A bicycle spoke according to either claim 1 or claim 2, wherein
said first cross-section of said outer end portion (40) is substantially elongated.

4. A bicycle spoke according to either claim 1 or claim 2, wherein
said first cross-section of said outer end portion (40) is substantially circular.

5. A bicycle spoke according to either claim 1 or claim 2, wherein
said first, second and third cross-sections are substantially uniform.

6. A spoked rim assembly, comprising:
an annular rim (24a) having an outer annular surface (68) adapted to receive a tire (26a) thereon, and a spoke attachment portion (72) with a plurality of openings (74); and
a plurality of inwardly extending spokes (22a) according to Claim 1;
wherein each of said spokes (22a) has the outer end portion (40) at least partially received within one of said openings (74), and wherein the offset first and second sections (50,52) of each outer end portion (40) retain said outer end portions (40) within said openings (74) of said spoke attachment portion (72) of said rim (24a).

7. A spoked rim assembly according to claim 6, wherein
said first section (50) of each of said spokes (22a) has a first surface (56) facing in a first direction to engage an inner surface of said rim (22a), and said second section (52) of each spoke has a second surface (58) facing in a second direction to engage an outer surface of said spoke attachment portion (72).

8. A spoked rim assembly according to either claim 6 or claim 7, wherein
said outer end portions (40) of said spokes (22a) have an elongated cross-section, and said openings (74) of said rim (22a) are elongated slots.

9. A spoked rim assembly according to claim 8, wherein
said elongated cross-sections of said spokes (22a) are substantially identical or smaller in cross-section than said first sections (50) of said spokes (22a) to allow said first sections (50) to pass therethrough.

10. A spoked rim assembly according to any of claims 6 to 9, wherein
said inner end portions (44) of said spokes (22a) have threads thereon.

11. A spoked rim assembly according to any of claims 6 to 9, wherein
said inner end portions (44) of said spokes (22a) include abutments for engaging a part of a hub (20a,20b).

12. A spoked rim assembly according to claim 11, wherein
said abutments are part of spoke nipples (46) which are adjustably coupled to said inner end portions (44) of said spokes (22a) for longitudinal adjustment of the spokes (22a).

13. A spoked rim assembly according to any of claims 6 to 12, wherein
said spoke attachment portion (72) of said rim (24a) has at least twelve of said openings (74), with at least six of said openings (74) located on a first side of said rim (24a) and at least six of said openings (74) located on a second side of said rim (24a).

14. A spoked rim assembly according to any of claims 6 to 13, wherein
said spoke attachment portion (72) of rim (24a) has at least sixteen of said openings (74), with at least eight of said openings (74) located on a first side of said rim (24a) and at least eight of said openings (74) located on a second side of said rim (24a).

15. A spoked rim assembly according to any of claims 6 to 14, wherein
said spoke attachment portion (72) is hollow and has a pair of oppositely facing outer surfaces with said openings (74) being formed therein.

16. A spoked rim assembly according to claim 15, wherein
said outer surfaces of said spoke attachment portion (72) being angled inwardly towards a center plane of said rim (24a).

17. A spoked rim assembly according to any of claims 6 to 16, wherein
said spoke attachment portion comprises a plurality of attachment members (671) located at spaced locations about an inner annular surface of said rim (624).

18. A spoked rim assembly according to claim 17, wherein
said attachment members (671) are fixedly coupled to said rim (624) via fasteners (675).

19. A spoked rim assembly according to claim 6, wherein
said spoke attachment portion is formed by a pair of oppositely facing sidewalls of said rim (124) with said openings (174) being formed therein.

20. A spoked rim assembly according to claim 19, wherein
said first sections (150) of said spokes (122) are fastened to said sidewalls of said rim (124) via fastening means (160).

21. A spoked rim assembly according to either claim 19 or claim 20, wherein
said second sections of said spokes (122) are fastened to said sidewalls of said rim (124) via fastening means (160).

22. A spoked rim assembly according to claim 19, wherein
said first sections (150) of said spokes are fixedly coupled to said rim (124) by spot welds.

23. A spoked rim assembly according to claim 19, wherein
said first sections (150) of said spokes (122) are fixedly coupled to said rim (124) by adhesive.

24. A spoked rim assembly according to claim 19, wherein
said second sections of said spokes (122) are fixedly coupled to said rim (124) by spot welds.

25. A spoked rim assembly according to claim 19, wherein
said second sections of said spokes (122) are fixedly coupled to said rim (124) by adhesive.

26. A spoked rim assembly according to any of claims 6 to 25, wherein
said annular rim (324) has an annular bulged section located radially inwardly of said openings (374), said bulged section having a width which is larger than the width of said rim (324) along said openings (374).

27. A spoked rim assembly according to claim 26, wherein
said bulged section has a pair of oppositely facing convex outer surfaces (372).

28. A bicycle wheel, comprising:
a spoked rim assembly according to Claim 6; and
a central hub (20a) having a plurality of spoke attachment parts (32a) with each of said spoke attachment parts (32a) being coupled to one of said inner end portions (44) of said spokes (22a).

29. A bicycle wheel according to claim 28, wherein
said outer end portions (40) of said spokes (22a) have an elongated cross-section, and said openings (74) of said rim (24a) are elongated slots.

30. A bicycle wheel according to claim 29, wherein
said elongated cross-sections of said spokes (22a) are substantially identical or smaller in cross-section than said first sections (50) of said spokes (22a) to allow said first sections (50) to pass therethrough.

31. A bicycle wheel according to any of claims 28 to 30, wherein
said inner end portions (44) of said spokes (22a) include abutments for engaging a part of the hub (20a).

32. A bicycle wheel according to any of claims 28 to 30, wherein
said inner end portions (44) of said spokes (22a) are adjustably coupled to said hub (20a) for longitudinal adjustment of said spokes (22a).

33. A bicycle wheel according to claim 32, wherein
said hub (20a) has a pair of flanges at each end with a plurality of bores (34a) having said inner end portions (44) of said spokes (22a) located therein, said inner end portions (44) of said spokes (22a) are threaded with spoke nipples (46) threaded thereon for longitudinal adjustment of the spokes (22a).

34. A bicycle wheel according to any of claims 28 to 33, wherein
said spoke attachment portion (72) of said rim (24a) has at least twelve of said openings (74), with at least six of said openings (74) located on a first side of said rim (24a) and at least six of said openings (74) located on a second side of said rim (24a).

35. A bicycle wheel according to any of claims 28 to 34, wherein
said spoke attachment portion (72) of rim (24a) has at least sixteen of said openings (74), with at least eight of said openings (74) located on a first side of said rim (24a) and at least eight of said openings (74) located on a second side of said rim (24a).

36. A bicycle wheel according to any of claims 28 to 35, wherein
said annular rim (324) has an annular bulged section located radially inwardly of said openings (374), said bulged section having a width which is larger than the width of said rim (324) along said openings (374).

37. A bicycle wheel according to claim 36, wherein
said bulged section has a pair of oppositely facing convex outer surfaces (372).

38. A bicycle wheel according to claim 36, wherein
said spoke attachment portion is formed by a pair of oppositely facing sidewalls of said rim (124), and said spokes (122) are permanently fastened to said sidewalls.

## Patentansprüche

1. Fahrradspeiche mit einem äußeren Endabschnitt (40), der in eine Öffnung (74) einer Felge (24a) eingesetzt ist,
einem mit dem äußeren Endabschnitt (40) verbundenen Zentralabschnitt (42), der radial einwärts zu dem äußeren Endabschnitt (40) liegt, und
einem inneren Endabschnitt (44), der mit dem Zentralabschnitt (42) verbunden ist und radial einwärts zu dem Zentralabschnitt (42) liegt,
wobei der äußere Endabschnitt (40) einen ersten Abschnitt (50) aufweist, der ein freies Ende bildet, einen zweiten Abschnitt (52), der mit dem Zentralabschnitt (42) verbunden ist, und einen Winkelabschnitt (54), der sich zwischen dem ersten und zweiten Abschnitt (50, 52) erstreckt, wobei der erste Abschnitt (50) einen ersten Querschnitt aufweist, der zweite Abschnitt (52) einen zweiten Querschnitt aufweist, der Winkelabschnitt (54) einen dritten Querschnitt aufweist und der erste Querschnitt des ersten Abschnitts (50) in seinem Querschnitt nicht größer ist als der dritte Querschnitt des Winkelabschnitts (54),
**dadurch gekennzeichnet, dass**
der erste Abschnitt (50) in einer ersten Fläche liegt, die von einer zweiten Fläche beabstandet ist, in der der zweite Abschnitt (52) liegt, und die erste und zweite Fläche im wesentlichen parallel sind.

2. Fahrradspeiche nach Anspruch 1,
**wobei**
der innere Endabschnitt (44) ein Gewinde aufweist.

3. Fahrradspeiche nach Anspruch 1 oder 2,
**wobei**
der erste Querschnitt des äußeren Endabschnitts (40) im wesentlichen langgestreckt ist.

4. Fahrradspeiche nach Anspruch 1 oder 2,
**wobei**
der erste Querschnitt des äußeren Endabschnitts (40) im wesentlichen kreisförmig ist.

5. Fahrradspeiche nach Anspruch 1 oder 2,
**wobei**
der erste, zweite und dritte Querschnitt im wesentlichen einheitlich sind.

6. Felgenanordnung mit Speichen mit
einer ringförmigen Felge (24a) mit einer äußeren Ringfläche (68), die zur Aufnahme eines Reifens (26a) auf dieser eingerichtet ist, und einem Speichenbefestigungsabschnitt (72) mit einer Mehrzahl an Öffnungen (74) und einer Mehrzahl von sich nach innen erstreckenden Speichen (22a) gemäß Anspruch 1, wobei
der äußere Endabschnitt (40) jeder Speiche (22a) zumindest teilweise in eine der Öffnungen (74) aufgenommen ist und
**wobei**
die beabstandeten ersten und zweiten Abschnitte (50, 52) eines jeden äußeren Endabschnitts (40) den äußeren Endabschnitt (40) innerhalb der Öffnungen (74) des Speichenbefestigungsabschnitts (72) der Felge (24) halten.

7. Felgenanordnung mit Speichen nach Anspruch 6,
**wobei**
der erste Abschnitt (50) einer jeden Speiche (22a) eine erste Fläche (56) aufweist, die in eine erste Richtung ausgerichtet ist, um an einer Innenfläche der Felge (22a) anzuliegen und der zweite Abschnitt (52) einer jeden Speiche eine zweite Fläche (58) aufweist, die in eine zweite Richtung ausgerichtet ist, um an einer Außenfläche des Speichenbefestigungsbereichs (72) anzuliegen.

8. Felgenanordnung mit Speichen nach Anspruch 6 oder 7,
**wobei**
die äußeren Endabschnitte (40) der Speichen (22a) einen langgestreckten Querschnitt aufweisen und die Öffnung (74) der Felge (22a) langgestreckte Nuten sind.

9. Felgenanordnung mit Speichen nach Anspruch 8,
**wobei**
die langgestreckten Querschnitte der Speichen (22a) im wesentlichen identisch oder kleiner im Querschnitt sind als die ersten Abschnitte (50) der Speichen (22a), um den ersten Abschnitten (50) den Durchtritt hierdurch zu ermöglichen.

10. Felgenanordnung mit Speichen nach einem der Ansprüche 6 bis 9,
**wobei**
die inneren Endabschnitte (44) der Speichen (22a) Gewinde aufweisen,

11. Felgenanordnung mit Speichen nach einem der Ansprüche 6 bis 9,
**wobei**
die inneren Endabschnitte (44) der Speichen (22a) Widerlager zum Eingriff in einen Teil einer Nabe (20a, 20b) aufweisen.

12. Felgenanordnung mit Speichen nach Anspruch 11,
**wobei**
die Widerlager Teile von Speichennippel (46) sind, die einstellbar mit den inneren Endabschnitten (44) der Speichen (22a) zur Längeneinstellung der Speichen (22a) verbunden sind.

13. Felgenanordnung mit Speichen nach einem der Ansprüche 6 bis 12,
**wobei**
der Speichenbefestigungsbereich (72) der Felge (24) zumindest zwölf Öffnungen (74) aufweist mit zumindest sechs Öffnungen (74), die auf einer ersten Seite der Felge (24a) liegen und zumindest sechs Öffnungen (74), die auf einer zweiten Seite der Felge (24a) liegen.

14. Felgenanordnung mit Speichen nach einem der Ansprüche 6 bis 13,
**wobei**
der Speichenbefestigungsabschnitt (72) der Felge (24) zumindest sechzehn Öffnungen (74) aufweist, mit zumindest acht Öffnungen (74), die auf einer ersten Seite der Felge (24a) liegen, und zumindest acht Öffnungen (74), die auf einer zweiten Seite der Felge (24a) liegen.

15. Felgenanordnung mit Speichen nach einem der Ansprüche 6 bis 14,
**wobei**
der Speichenbefestigungsbereich (72) hohl ist und ein Paar einander abgewandt ausgerichteten Außenflächen aufweist mit den darin ausgebildeten Öffnungen (74).

16. Felgenanordnung mit Speichen nach Anspruch 15,
**wobei**
die Außenflächen des Speichenbefestigungsabschnitts (72) nach innen zu einer Mittelfläche der Felge (24a) geneigt sind.

17. Felgenanordnung mit Speichen nach einem der Ansprüche 6 bis 16,
**wobei**
der Speichenbefestigungsbereich eine Mehrzahl von Aufnahmeelementen (671) aufweist, die beabstandet an einer inneren Kreisfläche der Felge (624) angeordnet sind.

18. Felgenanordnung mit Speichen nach Anspruch 17,
**wobei**
die Aufnahmeelemente (671) starr mit der Felge (624) über Befestigungsmittel (675) verbunden sind.

19. Felgenanordnung mit Speichen nach Anspruch 6,
**wobei**
der Speichenbefestigungsbereich durch ein Paar einander abgewandt ausgerichteten Seitenwände der Felge (124) gebildet wird, in denen die Öffnungen (174) ausgebildet sind.

20. Felgenanordnung mit Speichen nach Anspruch 19,
**wobei**
die ersten Abschnitte (150) der Speichen (122) an den Seitenwänden der Felge (124) über Befestigungsmittel (160) befestigt sind.

21. Felgenanordnung mit Speichen nach Anspruch 19 oder 20,
**wobei**
die zweiten Abschnitte der Speichen (122) an den Seitenwänden der Felge (124) über Befestigungsmittel (160) befestigt sind.

22. Felgenanordnung mit Speichen nach Anspruch 19,
**wobei**
die ersten Abschnitte (150) der Speichen starr mit der Felge (124) über Schweißpunkte verbunden sind.

23. Felgenanordnung mit Speichen nach Anspruch 19,
**wobei**
die ersten Abschnitte (150) der Speichen (122) starr mit der Felge (124) über einen Klebstoff verbunden sind.

24. Felgenanordnung mit Speichen nach Anspruch 19,
**wobei**
die zweiten Abschnitte (150) der Speichen starr mit der Felge (124) über Schweißpunkte verbunden sind.

25. Felgenanordnung mit Speichen nach Anspruch 19,
**wobei**
die zweiten Abschnitte der Speichen (122) starr mit der Felge (124) über einen Klebstoff verbunden sind.

26. Felgenanordnung mit Speichen nach einem der Ansprüche 6 bis 25,
**wobei**
die Ringfelge (324) einen kreisförmigen, vorgewölbten, radial einwärts zu den Öffnungen (374) angeordneten Abschnitt aufweist, und der vorgewölbte Abschnitt eine Breite hat, die größer ist als die Breite der Felge (324) über die Öffnungen (374).

27. Felgenanordnung mit Speichen nach Anspruch 26,
**wobei**
der vorgewölbte Abschnitt ein Paar einander abgewandt angeordneten konvexen Außenflächen (372) aufweist.

28. Fahrradrad, mit einer Felgenanordnung mit Speichen nach Anspruch 6, und einer zentralen Nabe (20a) und einer Mehrzahl an Speichenbefestigungsteilen (32a), von denen jedes der Speichenbefestigungsteile (32a) mit einem der inneren Endabschnitte (44) der Speichen (22a) verbunden ist.

29. Fahrradrad nach Anspruch 28,
**wobei**
die äußeren Endabschnitte (40) der Speichen (22a) einen langgestreckten Querschnitt aufweisen und die Öffnungen (74) der Felge (24a) langgestreckte Nuten sind.

30. Fahrradrad nach Anspruch 29,
**wobei**
die langgestreckten Querschnitte der Speichen (22a) im wesentlichen identisch oder kleiner in ihrem Querschnitt sind als die ersten Abschnitte (50) der Speichen (22a), um den ersten Abschnitten (50) den Durchtritt hierdurch zu ermöglichen.

31. Fahrradrad nach einem der Ansprüche 28 bis 30,
**wobei**
die inneren Endabschnitte (44) der Speichen (22a) Widerlager zum Eingriff in einen Teil der Nabe (20a) aufweisen.

32. Fahrradrad nach einem der Ansprüche 28 bis 30,
**wobei**
die inneren Endabschnitte (44) der Speichen (22a) fiir die Längeneinstellung der Speichen (22a) einstellbar mit der Nabe (20a) verbunden sind.

33. Fahrradrad nach Anspruch 32,
**wobei**
die Nabe (20a) ein Paar von Flanschen an jedem Ende aufweist mit einer Mehrzahl von Bohrungen (34a), in denen die inneren Endabschnitte (44) der Speichen (22a) angeordnet sind, wobei die inneren Endabschnitte (44) der Speichen (22a) ein Gewinde mit darauf geschraubten Speichennippeln (46) zur Längseinstellung der Speichen (22a) aufweisen.

34. Fahrradrad nach einem der Ansprüche 28 bis 33,
**wobei**
der Speichenbefestigungsbereich (72) der Felge (24a) zumindest zwölf Öffnungen (74) aufweist, mit zumindest sechs Öffnungen (74), die auf einer ersten Seite der Felge (24a) angeordnet sind, und zumindest sechs Öffnungen (74), die an einer zweiten Seite der Felge (24a) angeordnet sind.

35. Fahrradrad nach einem der Ansprüche 28 bis 34,
**wobei**
der Speichenbefestigungsbereich (72) der Felge (24a) zumindest sechzehn Öffnungen (74) aufweist, mit zumindest acht Öffnungen (74), die an einer ersten Seite der Felge (24a) angeordnet sind, und zumindest acht Öffnungen (74), die an einer zweiten Seite der Felge (24a) angeordnet sind.

36. Fahrradrad nach einem der Ansprüche 28 bis 35,
**wobei**
die ringförmige Felge (324) eine ringförmig vorgewölbte, radial einwärts zu den Öffnungen (374) angeordneten Abschnitt aufweist, wobei der vorgewölbte Abschnitt eine Breite hat, die größer ist als die Breite der Felge (324) über die Öffnungen (374).

37. Fahrradrad nach Anspruch 36,
**wobei**
der vorgewölbte Abschnitt ein Paar einander abgewandt ausgerichtete konvexe Außenoberflächen (372) aufweist.

38. Fahrradrad nach Anspruch 36,
**wobei**
der Speichenbefestigungsbereich durch ein Paar einander abgewandt ausgerichtete Seitenwänden der Felge (124) gebildet wird und die Speichen (122) dauerhaft an den Seitenwänden befestigt sind.

## Revendications

1. Rayon de roue de bicyclette, comprenant :
une partie d'extrémité externe (40) reçue dans une ouverture (74) d'une jante (24a) ;
une partie centrale (42) couplée à ladite partie d'extrémité externe (40) et placée radialement vers l'intérieur de ladite partie d'extrémité externe (40) ; et
une partie d'extrémité interne (44) couplée à ladite partie centrale (42), et placée radialement vers l'intérieur de ladite partie centrale (42),
ladite partie d'extrémité externe (40) comportant une première section (50) formant une extrémité libre, une deuxième section (52) couplée à ladite partie centrale (42), et une section courbée (54) s'étendant entre ladite première et ladite deuxième section (50, 52), ladite première section (50) présentant une première section de coupe, ladite deuxième section (52) présentant une deuxième section de coupe, et ladite section courbée (54) présentant une troisième section de coupe, avec ladite première section de coupe de ladite première section (50) n'étant pas plus grande en section de coupe que ladite troisième section de coupe de ladite section courbée (54) ;
**caractérisé en ce que** ladite première section (50) se situe dans un premier plan décalé d'un second plan dans lequel se situe ladite deuxième section (52), ledit premier et ledit second plan étant sensiblement parallèles.

2. Rayon de roue de bicyclette selon la revendication 1, dans lequel ladite partie d'extrémité interne (44) est filetée.

3. Rayon de roue de bicyclette selon la revendication 1 ou la revendication 2, dans lequel ladite première section de coupe de ladite partie d'extrémité externe (40) est sensiblement allongée.

4. Rayon de roue de bicyclette selon la revendication 1 ou la revendication 2, dans lequel ladite première section de coupe de ladite partie d'extrémité externe (40) est sensiblement circulaire.

5. Rayon de roue de bicyclette selon la revendication 1 ou la revendication 2, dans lequel lesdites première, deuxième et troisième sections de coupe sont sensiblement uniformes.

6. Assemblage de jante à rayons, comprenant :
une jante annulaire (24a) comportant une surface annulaire externe (68) adaptée pour recevoir un pneu (26a) sur celle-ci, et une partie de fixation de rayons (72) dotée d'une pluralité d'ouvertures (74) ; et
une pluralité de rayons (22a) s'étendant vers l'intérieur selon la revendication 1 ;
dans lequel chacun desdits rayons (22a) à la partie d'extrémité externe (40) reçue au moins partiellement dans l'une desdites ouvertures (74), et dans lequel les première et deuxième sections décalées (50, 52) de chaque partie d'extrémité externe (40) retiennent lesdites parties d'extrémité externe (40) dans lesdites ouvertures (74) de ladite partie de fixation de rayons (72) de ladite jante (24a).

7. Assemblage de jante à rayons selon la revendication 6, dans lequel ladite première section (50) de chacun desdits rayons (22a) présente une première surface (56) faisant face dans une première direction afin d'engager une surface interne de ladite jante (22a), et ladite deuxième section (52) de chaque rayon présente une seconde surface (58) faisant face dans une seconde direction afin d'engager une surface externe de ladite partie de fixation de rayons (72).

8. Assemblage de jante à rayons selon la revendication 6 ou la revendication 7, dans lequel lesdites parties d'extrémité externe (40) présentent une section de coupe allongée, et lesdites ouvertures (74) de ladite jante (22a) sont des fentes allongées.

9. Assemblage de jante à rayons selon la revendication 8, dans lequel lesdites sections de coupe allongées desdits rayons (22a) sont des sections sensiblement identiques ou plus petites que lesdites premières sections (50) desdits rayons (22a), afin de permettre auxdites premières sections (50) de passer à travers.

10. Assemblage de jante à rayons selon l'une quelconque des revendications 6 à 9, dans lequel lesdites parties d'extrémité interne (44) desdits rayons (22a) comportent sur celles-ci des filetages.

11. Assemblage de jante à rayons selon l'une quelconque des revendications 6 à 9, dans lequel lesdites parties d'extrémité interne (44) desdits rayons (22a) comprennent des butées destinées à engager une partie d'un moyeu (20a, 20b).

12. Assemblage de jante à rayons selon la revendication 11, dans lequel lesdites butées font partie d'embouts de rayon (46) couplés de façon ajustable avec lesdites parties d'extrémité interne (44) desdits rayons (22a) afin de pouvoir ajuster longitudinalement les rayons (22a).

13. Assemblage de jante à rayons selon l'une quelconque des revendications 6 à 12, dans lequel ladite partie de fixation de rayons (72) de ladite jante (24a) comporte au moins douze desdites ouvertures (74), avec au moins six desdites ouvertures (74) placées sur un premier côté de ladite jante (24a), et au moins six desdites ouvertures (74) placées sur un second côté de ladite jante (24a).

14. Assemblage de jante à rayons selon l'une quelconque des revendications 6 à 13, dans lequel ladite partie de fixation de rayons (72) de la jante (24a) comporte au moins seize desdites ouvertures (74), avec au moins huit desdites ouvertures (74) placées sur un premier côté de ladite jante (24a), et au moins huit desdites ouvertures (74) placées sur un second côté de ladite jante (24a).

15. Assemblage de jante à rayons selon l'une quelconque des revendications 6 à 14, dans lequel ladite partie de fixation de rayons (72) est creuse, et comporte une paire de surfaces externes se faisant face de façon opposée, avec lesdites ouvertures (74) formées dans celle-ci.

16. Assemblage de jante à rayons selon la revendication 15, dans lequel lesdites surfaces externes de ladite partie de fixation de rayons (72) sont inclinées vers l'intérieur en direction d'un plan au centre de ladite jante (24a).

17. Assemblage de jante à rayons selon l'une quelconque des revendications 6 à 16, dans lequel ladite partie de fixation de rayons comporte une pluralité d'éléments de fixation (671) placés en des emplacements espacés autour d'une surface annulaire interne de ladite jante (624).

18. Assemblage de jante à rayons selon la revendication 17, dans lequel lesdits éléments de fixation (671) sont fixement couplés à ladite jante (624) via des attaches (675).

19. Assemblage de jante à rayons selon la revendication 6, dans lequel ladite partie de fixation de rayons est formée à l'aide d'une paire de parois de ladite jante (624) se faisant face de façon opposée, avec lesdites ouvertures (74) formées dans celle-ci.

20. Assemblage de jante à rayons selon la revendication 19, dans lequel lesdites premières sections (150) desdits rayons (122) sont fixées auxdites parois de ladite jante (124) via des moyens de fixation (160).

21. Assemblage de jante à rayons selon la revendication 19 ou la revendication 20, dans lequel lesdites deuxièmes sections desdits rayons (122) sont fixées auxdites parois de ladite jante (124) via des moyens de fixation (160).

22. Assemblage de jante à rayons selon la revendication 19, dans lequel lesdites premières sections (150) desdits rayons sont fixement couplées à ladite jante (124) à l'aide de points de soudure.

23. Assemblage de jante à rayons selon la revendication 19, dans lequel lesdites premières sections (150) desdits rayons (122) sont fixement couplées à ladite jante (124) à l'aide d'adhésif.

24. Assemblage de jante à rayons selon la revendication 19, dans lequel lesdites deuxièmes sections desdits rayons (122) sont fixement couplées à ladite jante (124) à l'aide de points de soudure.

25. Assemblage de jante à rayons selon la revendication 19, dans lequel lesdites deuxièmes sections desdits rayons (122) sont fixement couplées à ladite jante (124) à l'aide d'adhésif.

26. Assemblage de jante à rayons selon l'une quelconque des revendications 6 à 25, dans lequel ladite jante annulaire (324) présente une section bombée annulaire placée radialement vers l'intérieur desdites ouvertures (374), ladite section bombée ayant une largeur plus grande que la largeur de ladite jante (324) le long desdites ouvertures (374).

27. Assemblage de jante à rayons selon la revendication 26, dans lequel ladite section bombée présente une paire de surfaces (372) externes et convexes se faisant face de façon opposée.

28. Roue de bicyclette, comprenant :
un assemblage de jante à rayons selon la revendication 6 ; et
un moyeu central (20a) comportant une pluralité de parties de fixation de rayons (32a), avec chacune desdites parties de fixation de rayons (32a) couplée à l'une desdites parties d'extrémité interne (44) desdits rayons (22a).

29. Roue de bicyclette selon la revendication 28, dans laquelle lesdites parties d'extrémité externe (40) desdits rayons (22a) présentent une section de coupe allongée, et lesdites ouvertures (74) de ladite jante (24a) sont des fentes allongées.

30. Roue de bicyclette selon la revendication 29, dans laquelle lesdites sections de coupe allongées desdits rayons (22a) sont des sections sensiblement identiques ou plus petites que lesdites premières sections (50) desdits rayons (22a), afin de permettre auxdites premières sections (50) de passer à travers.

31. Roue de bicyclette selon l'une quelconque des revendications 28 à 30, dans laquelle lesdites parties d'extrémité interne (44) desdits rayons (22a) comprennent des butées destinées à engager une partie d'un moyeu (20a).

32. Roue de bicyclette selon l'une quelconque des revendications 28 à 30, dans laquelle lesdites parties d'extrémité interne (44) desdits rayons (22a) sont couplées de façon ajustable avec ledit moyeu (20a) afin de pouvoir ajuster longitudinalement lesdits rayons (22a).

33. Roue de bicyclette selon la revendication 32, dans laquelle ledit moyeu (20a) comporte une paire de brides à chaque extrémité, avec une pluralité de trous calibrés (34a) ayant lesdites parties d'extrémité interne (44) placées dans ceux-ci, et lesdites parties d'extrémité interne (44) desdits rayons (22a) sont filetées avec des embouts de rayon (46) filetés sur celles-ci afin de pouvoir ajuster longitudinalement lesdits rayons (22a).

34. Roue de bicyclette selon l'une quelconque des revendications 28 à 33, dans laquelle ladite partie de fixation de rayons (72) de ladite jante (24a) comporte au moins douze desdites ouvertures (74), avec au moins six desdites ouvertures (74) placées sur un premier côté de ladite jante (24a), et au moins six desdites ouvertures (74) placées sur un second côté de ladite jante (24a).

35. Roue de bicyclette selon l'une quelconque des revendications 28 à 34, dans laquelle ladite partie de fixation de rayons (72) de la jante (24a) comporte au moins seize desdites ouvertures (74), avec au moins huit desdites ouvertures (74) placées sur un premier côté de ladite jante (24a), et au moins huit desdites ouvertures (74) placées sur un second côté de ladite jante (24a).

36. Roue de bicyclette selon l'une quelconque des revendications 28 à 35, dans laquelle ladite jante annulaire (324) présente une section bombée annulaire placée radialement vers l'intérieur desdites ouvertures (374), ladite section bombée ayant une largeur plus grande que la largeur de ladite jante (324) le long desdites ouvertures (374).

37. Roue de bicyclette selon la revendication 36, dans laquelle ladite section bombée présente une paire de surfaces (372) externes et convexes se faisant face de façon opposée.

38. Roue de bicyclette selon la revendication 36, dans laquelle ladite partie de fixation de rayons est formée à l'aide d'une paire de parois de ladite jante (124) se faisant face de façon opposée, et lesdits rayons (122) sont fixés de façon permanente auxdites parois.
